# EUROPÄISCHE PATENTSCHRIFT

(11) **EP 1 694 589 B1**
(45) Veröffentlichungstag und Bekanntmachung des Hinweises auf die Patenterteilung: **23.07.2008**
(21) Anmeldenummer: 04820038.0
(22) Anmeldetag: 06.12.2004
(51) Int. Cl.: B65G 47/14, B65G 47/30, B65G 17/36, B65G 15/58

(54) **VEREINZELUNGSEINRICHTUNG FÜR LANGTEILE SOWIE VORRICHTUNG ZUM TRANSPORT DERSELBEN**
SEPARATION DEVICE FOR ELONGATED PARTS AND DEVICE FOR TRANSPORTING SAID PARTS
DISPOSITIF DE SEPARATION POUR PIECES ALLONGEES ET DISPOSITIF DE TRANSPORT DESDITES PIECES

(30) Priorität: 15.12.2003 AT 20162003
(43) Veröffentlichungstag der Anmeldung: 30.08.2006
(73) Patentinhaber: STIWA-Fertigungstechnik Sticht Gesellschaft m.b.H, 4800 Attnang-Puchheim (AT)
(72) Erfinder: KRITZINGER, Johann, A-4873 Frankenburg (AT); ZOITL, Andreas, A-4692 Niederthalheim (AT)
(74) Vertreter: Secklehner, Günter
(86) Internationale Anmeldenummer: PCT/AT2004/000430
(87) Internationale Veröffentlichungsnummer: WO 2005/056439

(56) Entgegenhaltungen:
- AT-B- 363 384

## Beschreibung

Die Erfindung betrifft eine Vereinzelungseinrichtung für Langteile, wie im Oberbegriff des Anspruches 1 beschrieben.

Aus der AT 408 730 B ist eine Vorrichtung zum Fördern und Vereinzeln von Langteilen aus einer Teilmenge in einer zu deren Längserstreckung quer verlaufenden Förderrichtung bekannt, die eine einer Zufördereinrichtung für eine Teilmenge von Langteilen in Förderrichtung nachgeordnete Vereinzelungseinrichtung für die Langteile und eine an diese anschließende Abfördereinrichtung für die vereinzelten Langteile aufweist. Die Vereinzelungseinrichtung umfasst zumindest zwei quer zur Förderrichtung zueinander beabstandete Aufnahmebahnen für die Teilmengen bzw. die einzelnen Langteile, wobei sich die Aufnahmebahnen von der Zuförder- bis zur Abfördereinrichtung erstrecken. Die Aufnahmebahnen umfassen jeweils zumindest ein angetriebenes, endlos umlaufendes Transportorgan, insbesondere eine Kette, und in Förderrichtung in einem Abstand hintereinander in einer zur Förderrichtung quer verlaufenden Ebene paarweise angeordnete Mitnahmeorgane und verlaufen zu einer horizontalen Förderebene in etwa konkav, um aus der Teilmenge je Mitnehmerpaar die Langteile zu vereinzeln.

Eine Vorrichtung zum Fördern und Vereinzeln von Langteilen ist auch aus der AT 363 384 B bekannt, die eine Zufördereinrichtung, eine dieser in Förderrichtung nachgeordnete, erste Vereinzelungseinrichtung und eine dieser in Förderrichtung nachgeordnete, zweite Vereinzelungseinrichtung sowie eine dieser in Förderichtung nachgeordnete Abfördereinrichtung aufweist, wobei zwischen den Vereinzelungseinrichtungen eine Horizontalfördereinrichtung angeordnet ist, welche die Langteile vereinzelt der zweiten Vereinzelungseinrichtung zuführt.

Aufgabe der Erfindung ist es, den Durchsatz bzw. die Austragleistung von vereinzelten und gegebenenfalls richtig orientierten Langteilen an einer Vereinzelungseinrichtung zu erhöhen.

Die Aufgabe der Erfindung wird durch die im Kennzeichenteil des Anspruches 1 wiedergegebenen Merkmale gelöst. Vorteilhaft dabei ist, dass über die Vertiefungsnut der an den ungeordneten Langteilen im Schöpfbereich vorbeistreifenden Mitnahmeorgane eine besonders einfache und schonende Entnahme der Langteile aus der Teilmenge ermöglicht wird und jeder entnommene Langteil in Richtung auf den Nutboden quer zur Längserstreckung der Vertiefungsnut an den geneigt zueinander verlaufenden Führungsflächen entlanggleitet, bis er mit seiner Außenkontur gegen den Nutboden anliegt, sodass eine zuverlässige Förderung des von der Vertiefungsnut aufgenommenen, gegebenenfalls vereinzelten Langteiles sichergestellt wird. Ein besonders hoher Durchsatz von vereinzelten Montagteilen an der Vereinzelungseinrichtung wird gemäß der Erfindung auch dadurch erreicht, dass die Vertiefungsnut zumindest dem Doppelten der maximalen Länge des Langteiles entspricht und somit innerhalb einer Vertiefungsnut zumindest zwei Langteile in Richtung der Längserstreckung der Vertiefungsnut hintereinander aufgenommen werden können.

Vorteilhaft ist auch die Ausgestaltung nach Anspruch 2, da das Transportband als solches die Mitnahmeorgane ausbildet und sich dadurch der Aufbau in der Gesamtheit der Vereinzelungseinrichtung wesentlich vereinfacht.

Die Ausgestaltung nach Anspruch 3 ist von Vorteil, da bei Beschädigungen an einzelnen Mitnahmeorganen nicht das gesamte Transportorgan ausgewechselt werden muss, sondern nur einzelne, beschädigte Mitnahmeorgane.

Die Fortbildung nach Anspruch 4 ist vorteilhaft, da ein Abstandsspalt zwischen zwei in Förderrichtung hintereinander angeordneten Mitnahmeorganen sowohl in den Bewegungsabschnitten, in denen die in Reihe hintereinander parallel angeordneten Mitnahmeorgane geradlinig bewegt werden als auch in den Bewegungsabschnitten, in denen die in Reihe hintereinander parallel angeordneten Mitnahmeorgane umgelenkt werden, konstant bleibt und ein Verklemmen der Langteile, insbesondere wenn die Mitnahmeorgane an der Teilmenge von ungeordneten Langteilen im Schöpfbereich vorbeistreifen, zuverlässig vermieden wird. Zudem kann durch den geringen Abstandsspalt auch bei kurzer Länge des Transportorganes eine hohe Anzahl von Langteilen befördert werden.

Die Ausführung nach Anspruch 5 ist von Vorteil, da durch die unebene bzw. wellige Kontur der einander zugewandten Längskanten von zwei aufeinander folgenden Mitnahmeorganen ein Verklemmen eines Langteiles im Abstandsspalt zuverlässig vermieden wird, selbst wenn die minimale Querschnittabmessung des Langteiles geringfügig keiner ist als der Abstandsspalt und das Transportorgan umgelenkt wird, wie dies im Schöpfbereich, insbesondere im Mitnahmeabschnitt, der Fall ist. Somit können nun aber auch Langteile mit extrem dünner Wandstärke mittels des Transportorganes problemlos vereinzelt und befördert werden.

Von Vorteil erweisen sich auch die Ausbildungen nach den Ansprüchen 6 und 7, da mit der Aufteilung des dem Schöpfbereich zugewandten Stranges vom Transportorgan in mehrere, mit unterschiedlichen Funktionen behaftete Abschnitte, auf einfache Weise eine zuverlässige Vereinzelung bei der Beförderung der Langteile vom Schöpfbereich in Richtung des Abgabebereiches erreicht wird. Der Mitnahmeabschnitt ist in vorteilhafter Weise dem Schöpfbereich zugewandt, konkav gekrümmt ausgebildet, wodurch die Langteile aus dem Schöpfbereich zuverlässig in den Vertiefungsnuten der an diesen vorbeibewegten Mitnahmeorgane aufgenommen werden.

Gemäß den Ansprüchen 8 und 9 kann eine zuverlässige Ausscheidung von zumindest zwei aneinander haftenden oder ineinander verhakten Langteilen im Bereich des Ausscheideabschnittes erreicht werden.

Nach den Ausführungen in den Ansprüchen 10 und 11 wird einerseits alleinig aufgrund der Wirkung der Schwerkraft auf die Teilmenge von Langteilen im Schöpfbereich eine selbsttätige Zufuhr der Langteile in Richtung auf den Mitnahmeabschnitt erreicht und andererseits das Einbringen von einem oder zwei Langteilen in die Vertiefungsnut eines Mitnahmeorganes begünstigt.

Die Ausführung nach Anspruch 12 eignet sich besonders gut für Langteile, die leicht ineinander verhaken, da die Langteile im Schöpfbereich in ihrer Lage im Wesentlichen unverändert nur entlang der Zuführschurre in Richtung auf das Transportorgan rutschen, diese jedoch nicht aufeinander abwälzen.

Aber auch die Ausgestaltung nach Anspruch 13 ist von Vorteil, da durch die Umlaufbewegung des Transportorganes ein selbsttätiges Ausrichten der Langteile zueinander in eine quer zur Förderrichtung parallele und zur weiteren Beförderung geeignete Lage erfolgt und die Austragleistung an der Vereinzelungseinrichtung bei gleichbleibender Umlaufgeschwindigkeit des Transportorganes angehoben werden kann.

Die Ausgestaltung nach Anspruch 14 ist von Vorteil, da dadurch die im Bereich des Mitnahmeabschnittes an der Teilmenge von Langteilen vorbeistreifenden Mitnahmeorgane zuverlässig mit Langteilen bestückt werden und nach Verlassen des Mitnahmeabschnittes, die ineinander verhakte Langteile im Ausscheideabschnitt sofort wieder dem Schöpfbereich rückgeführt werden.

Vorteilhafte Ausgestaltungen der Vereinzelungseinrichtungen sind in den Ansprüchen 15 und 16 beschrieben.

Nach Anspruch 17 wird auch bei höheren Umlaufgeschwindigkeiten des Transportorganes eine sichere Führung der mit dem Transportorgan bewegungsmäßig verbundenen Antriebsorgane sichergestellt. Darüber hinaus kann auch die bei einer höheren Anzahl von Langteilen im Schöpfbereich auf das Transportorgan wirkende Gewichtskraft über die Antriebsorgane auf die Kulissenbahnen in den Rahmen der Vereinzelungseinrichtung abgetragen werden. Damit führen auch Belastungen durch hohe Gewichtskräfte der Langteile, zu keinen bleibenden Beschädigungen an der Vereinzelungseinrichtung.

Die Fortbildungen nach den Ansprüchen 18 bis 21 sind von Vorteil, da die in der Vertiefungsnut aufgenommenen, vereinzelten Langteile zwischen dem vorderen und hinteren Schenkel positioniert sind und selbst wenn im Ausscheideabschnitt ausgeschiedene, ineinander verhakte Langteile in Richtung des Schöpfbereiches hinabfallen, diese von der Abweiserfläche des vorderen Schenkels von den unterhalb liegenden Mitnahmeorganen abgelenkt werden, sodass die in Position liegenden Langteile in den unterhalb des Ausscheideabschnittes bewegten Mitnahmeorganen, nicht durch die herabfallenden Langteile mitgerissen werden.

Vorteilhaft sind auch die Ausgestaltungen nach den Ansprüchen 22 und 23, wodurch sichergestellt wird, dass in der Querschnittsebene der Vereinzelungseinrichtung betrachtet immer nur zwei vereinzelte Langteile hintereinander, jedoch nicht übereinander in der Vertiefungsnut aufgenommen werden können. Sofern zwei Langteile ineinander verhakt sind, werden diese zwar vorerst über die Vertiefungsnut des Mitnahmeorganes vom Mitnahmeabschnitt aus hochbefördert, jedoch im Ausscheideabschnitt infolge der Verlagerung des gemeinsamen Schwerpunktes außerhalb der Vertiefungsnut und im Zusammenwirken mit der Neigung des Ausscheideabschnittes selbsttätig ausgeschieden und in den Schöpfbereich zurückgeführt.

Eine vorteilhafte Ausbildung ist auch im Anspruch 24 beschrieben, wodurch über die geneigt zueinander verlaufenden Führungsflächen eine Zentrierung des der Vertiefungsnut zugeführten, zumindest einen Langteiles gegenüber der Vertiefungsnut erreicht wird.

Die Erfindung wird im Nachfolgenden anhand der in den Zeichnungen dargestellten Ausführungsbeispiele näher erläutert.

Es zeigen:
- Fig. 1: zeigt eine Vorrichtung zum Fördern, Vereinzeln und Ausrichten von Langteilen, in Seitenansicht, geschnitten gemäß den Linien I-I in Fig. 2, in stark vereinfachter Darstellung;
- Fig. 2: die erfindungsgemäße Vorrichtung zum Fördern, Vereinzeln und Ausrichten von Langteilen gemäß Fig. 1, in Draufsicht und stark vereinfachter Darstellung;
- Fig. 3: eine Schnittdarstellung gemäß den Linien III-III in Fig. 2 mit Ansicht auf eine erste und zweite Vereinzelungseinrichtung sowie auf eine erste Abfördereinrichtung, in stark vereinfachter Darstellung;
- Fig. 4: eine erste Ausführung der erfindungsgemäßen, zweiten Vereinzelungseinrichtung in Ansicht gemäß eingetragenem Pfeil IV in Fig. 3, in stark vereinfachter Darstellung;
- Fig. 5: eine Draufsicht auf einen zweiten Schöpfbereich einer Zuführschurre und einen Teilabschnitt vom Transportorgan und den Antriebsorganen der zweiten Vereinzelungseinrichtung, gemäß den Linien V-V in Fig. 3 und in stark vereinfachter Darstellung;
- Fig. 6: eine Ausschnittsvergrößerung aus Fig. III;
- Fig. 7: ein Antriebsorgan für das Transportorgan und eine Kulissenbahn für das Antriebsorgan in Seitenansicht und vereinfachter Darstellung;
- Fig. 8: eine Draufsicht auf das Transportorgan und die beidseits zu diesem angeordneten Antriebsorgane, in vereinfachter Darstellung;
- Fig. 9: eine Ausschnittsvergrößerung aus Fig. 8;
- Fig. 10: eine erste Ausführungsvariante eines Mitnahmeorganes des Transportorganes im Querschnitt;
- Fig. 11: eine zweite Ausführungsvariante eines Mitnahmeorganes des Transportorganes im Querschnitt;
- Fig. 12: eine dritte Ausführungsvariante eines Mitnahmeorganes des Transportorganes im Querschnitt;
- Fig. 13: eine andere Ausführungsvariante der erfindungsgemäßen, zweiten Vereinzelungseinrichtung in Seitenansicht, teilweise geschnitten und vereinfachter Darstellung;
- Fig. 14: eine weitere Ausführungsvariante der erfindungsgemäßen, zweiten Vereinzelungseinrichtung in Seitenansicht, teilweise geschnitten und stark vereinfachter Darstellung;
- Fig. 15: einen Teilbereich der Vorrichtung zum Fördern, Vereinzeln und Ausrichten von Langteilen mit einer anderen Ausführungsvariante der Vereinzelungseinrichtungen, in Seitenansicht und stark vereinfachter Darstellung;
- Fig. 16: eine zweite Ausführung der erfindungsgemäßen Vereinzelungseinrichtung mit einer weiteren Ausführung für die Bewegungsbahn bzw. Führung des Transportorganes, in Seitenansicht und stark vereinfachter Darstellung;
- Fig. 17: eine dritte Ausführung der erfindungsgemäßen Vereinzelungseinrichtung mit einer anderen Ausführung für die Bewegungsbahn bzw. Führung des Transportorganes, in Seitenansicht und stark vereinfachter Darstellung;
- Fig. 18: eine weitere Ausführungsvariante der Mitnahmeorgane des Transportorganes der erfindungsgemäßen Vereinzelungseinrichtung, in Draufsicht und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

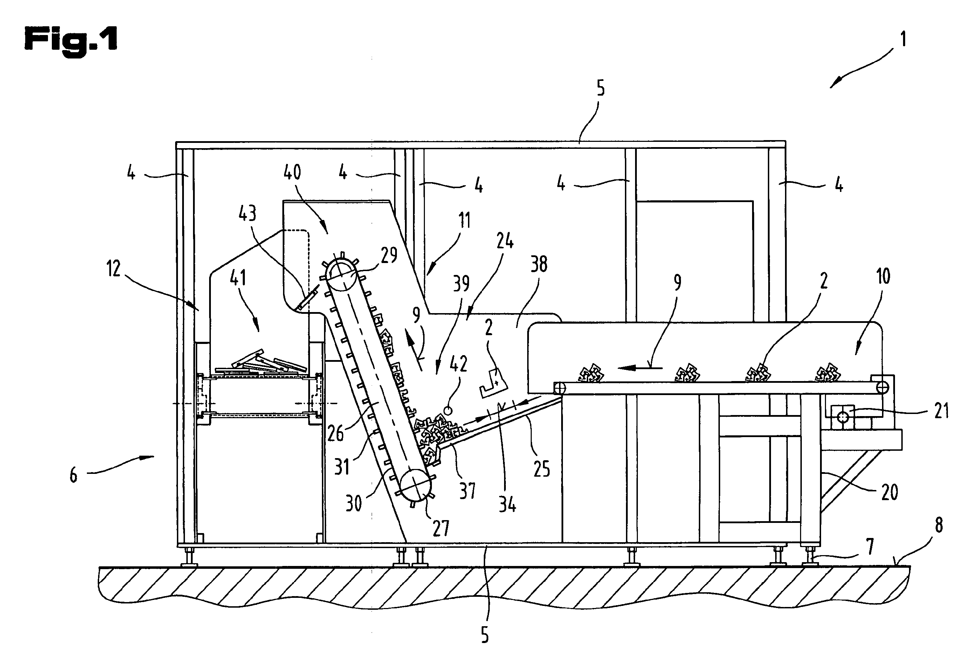

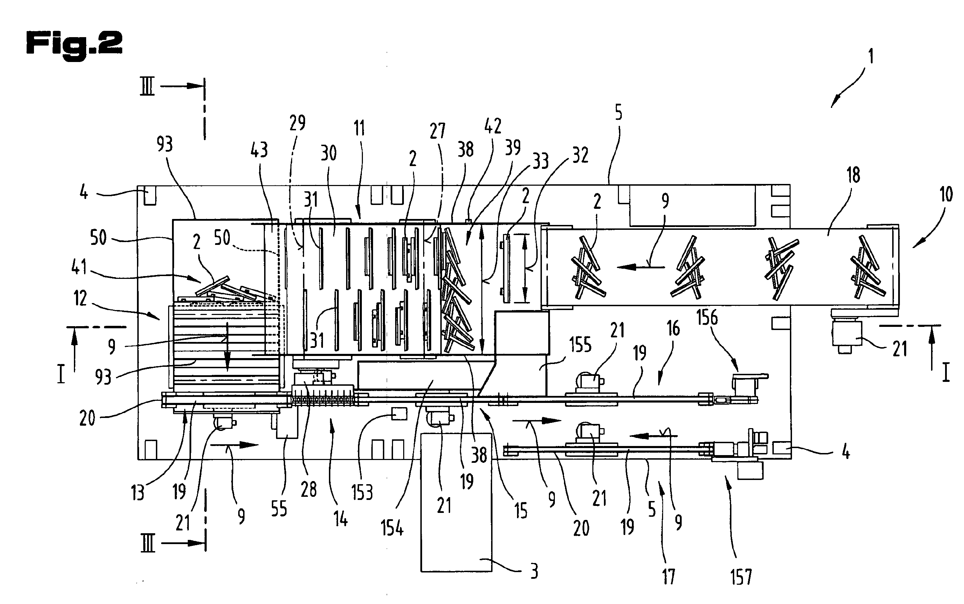

In den Fig. 1 und 2 ist eine Vorrichtung 1 zum Fördern, Vereinzeln und Ausrichten von stangen- bzw. streifenartigen Langteilen 2, beispielsweise aus einem nicht dargestellten Vorratsbehälter zu einer durch einen Block dargestellten Montage- und/oder Verarbeitungseinrichtung 3 gezeigt. Diese Vorrichtung 1 weist einen aus mehreren Profilen 4, 5 zusammengesetzten, selbsttragenden Grundrahmen 6 auf, welcher über der Höhe nach einstellbare Stützfüße 7 auf einer horizontalen Aufstandsfläche 8, beispielsweise einem Boden einer Werkshalle, abgestützt ist. Die Vorrichtung 1 weist in Förderrichtung der Langteile 2 - gemäß Pfeil 9 - unmittelbar aufeinanderfolgend, eine erste Zufördereinrichtung 10, eine erste Vereinzelungseinrichtung 11, eine zweite Vereinzelungseinrichtung 12, eine erste Abfördereinrichtung 13 für vereinzelte Langteile 2, eine Ausrichtvorrichtung 14, eine zweite Abfördereinrichtung 15, eine Pufferstrecke 16 und eine zweite Zufördereinrichtung 17 für die Montage- und/oder Verarbeitungseinrichtung 3 auf. Die Vereinzelungseinrichtungen 11, 12 sind zueinander um 90 ° versetzt angeordnet und auf dem Grundrahmen 6 gelagert. Daher kreuzen die Förderrichtungen - gemäß Pfeil 9 - der Vereinzelungseinrichtungen 11, 12 unter einem Winkel von 90°.

Die Zufördereinrichtungen 10, 17, die Abfördereinrichtungen 13, 15 und die Pufferstrecke 16 sind jeweils durch einen Linearförderer, insbesondere einen Band-, Gurt- oder Kettenförderer 18, 19 gebildet. Diese Linearförderer weisen jeweils ein endlos umlaufendes Zugmittel, wie Band, Gurt, Kette, und ein Traggestell 20 auf. Das Zugmittel ist um zumindest ein am Traggestell 20 drehbar gelagertes Antriebsorgan und Umlenkorgan geführt. Das Antriebsorgan ist mit einem Antrieb 21, beispielsweise einem Elektromotor, gekuppelt. Der jeweilige Antrieb 21 ist am Traggestell 20 befestigt.

Die der ersten Zufördereinrichtung 10 in Förderrichtung - gemäß Pfeil 9 - nachgeordnete und der zweiten Vereinzelungseinrichtung 12 in Förderrichtung - gemäß Pfeil 9 - vorgeordnete, erste Vereinzelungseinrichtung 11 ist gemäß dieser Ausführung durch einen Elevatorförderer gebildet und weist einen Vorratsbehälter 24 mit einer ersten Zuführschurre 25 und einen Bandförderer mit einem Rahmen 26 auf. Der Bandförderer ragt mit seinem unteren Ende in den Vorratsbehälter 24 bzw. die dieser aufweisende Zuführschurre 25 hinein und umfasst zumindest ein um eine walzenartige Umlenkrolle 27 und eine mit einem Antrieb 28 gekuppelte, walzenartige Antriebsrolle 29 geführtes, endlos umlaufendes Transportband 30 bzw. Transportorgan. Dieses Transportband 30 ist auf einer der Zuführschurre 25 zugewandten Breitseite mit in einer quer zu der Längserstreckung des Langteiles 2 verlaufenden Förderrichtung - gemäß Pfeil 9 - in zwei Reihen nebeneinander und zueinander in Förderrichtung - gemäß Pfeil 9 - versetzt angeordneten Mitnahmeorganen 31 versehen. Die jeweils in einer Reihe hintereinander liegenden Mitnahmeorgane 31 sind in Förderrichtung - gemäß Pfeil 9 - in einem Abstand voneinander angeordnet, der so bemessen ist, dass zwischen zwei aufeinander folgenden Mitnahmeorganen 31 etwa ein bis fünf Langteile 2 quer zur Längserstreckung des Transportbandes 30 hintereinander aufgenommen werden können. Die parallel zueinander angeordneten Mitnahmeorgane 31 weisen jeweils eine Länge auf, die etwa einer maximalen Länge 32 (wie in Fig. 2 an der vergrößerten Darstellung des Langteiles 2 eingetragen) des Langteiles 2 entspricht.

Eine andere Ausführung besteht darin, dass sich die in Förderrichtung - gemäß Pfeil 9 - hintereinander und im Abstand voneinander angeordneten Mitnahmeorgane 31 im wesentlichen über eine gesamte Breite 33 des Transportbandes 30 parallel erstrecken, wobei die Länge dieser Mitnahmeorgane 31 annähernd dem Doppelten der maximalen Länge 32 des Langteiles 2 entspricht.

Die quer zur Längserstreckung des Transportbandes 30 angeordneten Mitnahmeorgane 31 sind nach beiden Ausführungen in Form von Querstegen ausgebildet, die um eine annähernd einer maximalen Querschnittsabmessung 34 (wie in Fig. 1 an der vergrößerten Darstellung des Langteiles 2 eingetragen) der Langteile 2 engsprechenden Höhe senkrecht an der Breitseite vorragen. Das Transportband 30 der ersten Vereinzelungseinrichtung 11 weist eine Breite 33 auf, die zumindest dem Doppelten der maximalen Länge 32 eines Langteiles 2 entspricht.

Die Zuführschurre 25 weist einen in Richtung zum Transportband 30 hin nach unten geneigt verlaufenden Schurrenboden 37 und zwei von diesem abgewinkelte, aufrechte Schurrenseitenwände 38 auf. Das Transportband 30 des Bandförderers, der geneigte Schurrenboden 37 und die beiden, um den Schurrenboden 37 im Abstand voneinander im Wesentlichen parallel zueinander angeordneten Schurrenseitenwände 38 begrenzen einen Schöpfbereich 39 mit in etwa V-förmigem Querschnitt. Im Schöpfbereich 39 ist eine Menge an ungeordneten Langteilen 2 angesammelt.

Wie aus Fig. 1 und 2 ersichtlich, erstreckt sich das Transportband 30 vom Schöpfbereich 39 bis zu einen oberhalb desselben ausgebildeten Abgabebereich 40, insbesondere einer Abwurfstelle. Zwischen dem Abgabebereich 40 des Bandförderers der ersten Vereinzelungseinrichtung 11 und einem zweiten Schöpfbereich 41 der zweiten Vereinzelungseinrichtung 12, ist eine in Richtung zum zweiten Schöpfbereich 41 nach unten geneigte Ablenkplatte 43 angeordnet, über die jeder vom Abgabebereich 40 kommende Langteil 2 in den zweiten Schöpfbereich 41 der zweiten Vereinzelungseinrichtung 12 abgelenkt wird. Die Ablenkplatte 43 erstreckt sich dabei über die gesamte Breite 33 des Transportbandes 30.

Der Vorratsbehälter 24 ist im ersten Schöpfbereich 39 mit wenigstens einem Überwachungsorgan 42 in Form eines Sensors, beispielsweise eine Lichtschranke, ein elektromagnetischer Näherungsschalter oder dgl., für die Überwachung eines Füllstandes im Schöpfbereich 39 ausgestattet. Das selbsttätige Nachfüllen des ersten Schöpfbereiches 39 mit Langteilen 2 wird im Nachfolgenden kurz beschrieben.

Die Anlieferung der Langteile 2 zur ersten Zufördereinrichtung 10 erfolgt beispielsweise über Vorratsbehälter, die über ein Fahrerloses Transportsystem (FTS) oder manuell bereitgestellt werden. Die Langteile 2 werden vom Vorratsbehälter beispielsweise mittels einem Greifer, wie Magnetgreifer bei metallischen Langteilen 2 oder Zangengreifer bei nicht metallischen Langteilen 2, beispielsweise Kunststoff, ergriffen bzw. gehandhabt, an einer Aufgabestelle auf dem Bandförderer 18 abgelegt oder aus dem Vorratsbehälter auf den Bandförderer 18 als Schüttgut abgeleert und darauffolgend dem Schöpfbereich 39 intermittierend zugefördert. Sofern der Soll-Füllstand im Schöpfbereich 39 der ersten Vereinzelungseinrichtung 11 unterschritten wird, wird der Bandförderer 18 angetrieben, sodass Langteile 2 dem Schöpfbereich 39 ungeordnet zugeliefert werden, solange, bis der Soll-Füllstand im Schöpfbereich 39 erreicht oder geringfügig überschritten ist, worauf der Bandförderer 18 wieder abgeschalten wird. Dabei fallen die Langteile 2 vom Bandförderer 18 auf den geneigten Schurrenboden 37 hinab und rutschen in Richtung des Transportbandes 30 der ersten Vereinzelungseinrichtung 11 und füllen den Schöpfbereich 39 mindestens bis zum Soll-Füllstand auf.

Wie in Fig. 1 ersichtlich, wird mit den in Vorschubrichtung - gemäß eingetragenem Pfeil - umlaufenden Mitnahmeorganen 31 bzw. Querstegen aus der Menge von ungeordneten Langteilen 2 im Schöpfbereich 39, eine Teilmenge bzw. einzelne Langteile 2 abgestreift und die auf den Mitnahmeorganen 31 liegenden Langteile 2 nach oben zum Abgabebereich 40 befördert und in diesem in Folge der Umlenkung des Transportbandes 30 abgeworfen, über die Ablenkplatte 43 abgewiesen und in den zweiten Schöpfbereich 41 der zweiten Vereinzelungseinrichtung 12 befördert. Da der Schurrenboden 37 in Richtung des Transportbandes 30 geneigt ist, rutschen die Langteile 2 selbsttätig in Richtung auf das Transportband 30 zu. Dadurch entsteht ein gewisser Anpressdruck der Langteile 2 an die Mitnahmeorgane 31, sodass einzelne Langteile 2 durch die vorbeischleifenden Mitnahmeorgane 31 aus der Menge von ungeordneten Langteilen 2 herausgelöst und vereinzelt werden können.

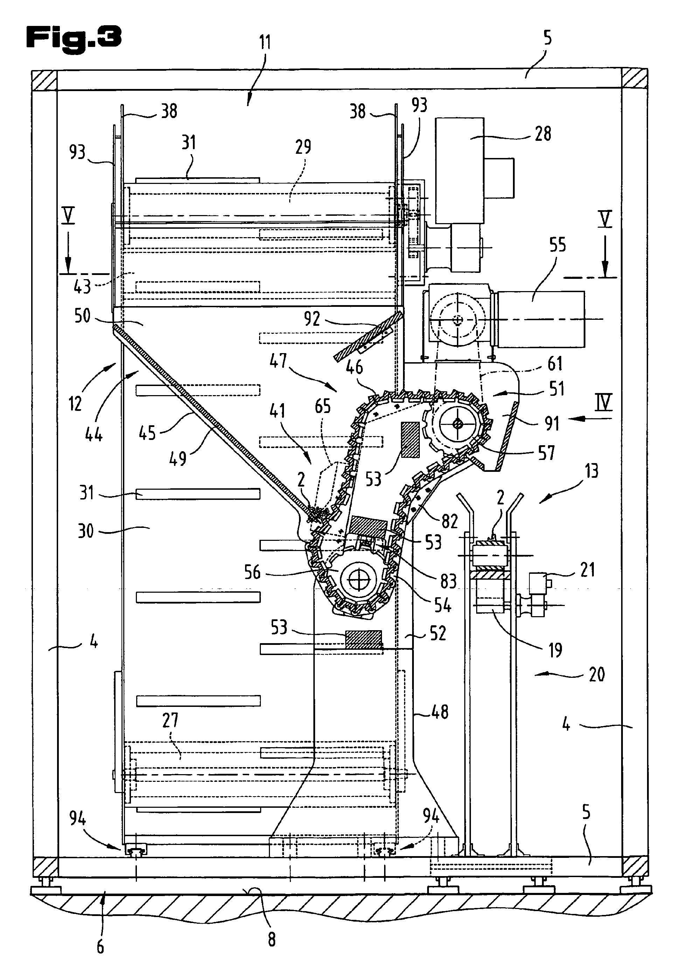

In Fig. 3 ist die Vorrichtung 1 mit der ersten Vereinzelungseinrichtung 11, der der ersten Vereinzelungseinrichtung 11 in Förderrichtung - gemäß Pfeil 9 - nachgeordneten, zweiten Vereinzelungseinrichtung 12 sowie der in Förderrichtung - gemäß Pfeil 9 - nachgeordneten, ersten Abfördereinrichtung 13 in Stirnansicht geschnitten, gezeigt. Wie oben beschrieben, wird dem zweiten Schöpfbereich 41 der zweiten Vereinzelungseinrichtung 12 nur eine Teilmenge aus der im ersten Schöpfbereich 39 der ersten Vereinzelungseinrichtung 11 vorhandenen Menge an Langteilen 2 zugeführt. Ein besonders hoher Durchsatz bzw. eine besonders hohe Austragleistung von Langteilen 2 an der zweiten Vereinzelungseinrichtung 12 kann dann erreicht werden, wenn ein Verhältnis der Anzahl der Langteile 2 im Schöpfbereich 39, 41 zwischen der ersten und zweiten Vereinzelungseinrichtung 11, 12 bis etwa 10:1 beträgt. Im Schöpfbereich 39 der ersten Vereinzelungseinrichtung 11 sollen maximal etwa zwischen 10 und 400 Langteile 2, insbesondere 20 und 80 Langteile 2, beispielsweise 30 und 50 Langteile 2, bevorratet werden. Verändert man das Verhältnis auf etwa 5:1, kann zusätzlich zu dem Vorteil des hohen Durchsatzes bzw. der hohen Austragleistung an der zweiten Vereinzelungseinrichtung 12, eine schonende Behandlung der Langteile 2 während des Zuführens und Vereinzelns erreicht werden.

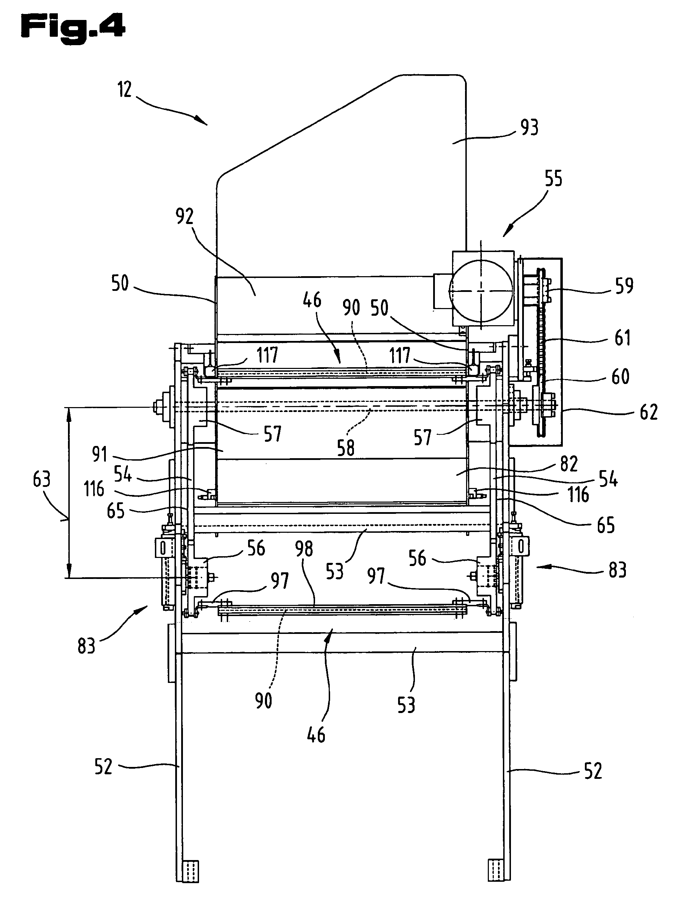

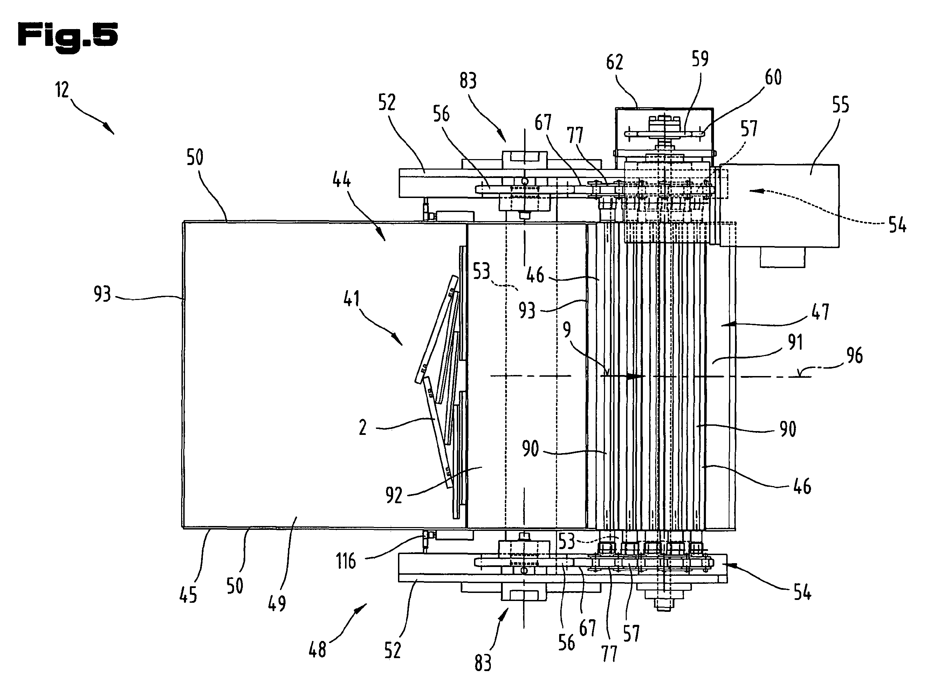

Die in den Fig. 4 und 5 in unterschiedlichen Ansichten gezeigte, zweite Vereinzelungseinrichtung 12 zum Fördern und Vereinzeln von Langteilen 2 aus einer Teilmenge in einer zu deren Längserstreckung quer verlaufenden Förderrichtung - gemäß Pfeil 9 - weist einen Vorratsbehälter 44 mit einer zweiten Zuführschurre 45 und ein durch mehrere gelenkig miteinander verbundene Mitnahmeorgane 46 bestehendes, endlos umlaufendes Transportorgan 47 sowie einen Rahmen 48 auf. Aus Gründen der besseren Übersicht ist in Fig. 4 und 5 nur ein Teilabschnitt des Transportorganes 47 und von beidseitig zu diesem angeordneten Antriebsorganen dargestellt. Die Mitnahmeorgane 46 sind streifenartig ausgebildet und verlaufen um einen Abstandsspalt distanziert parallel zueinander und quer zur Förderrichtung - gemäß Pfeil 9 - der Langteile 2 bzw. quer zur Längserstreckung des Transportorganes 47.

Die in Fig. 3 und 5 ersichtliche Zuführschurre 45 umfasst wiederum einen in Richtung zum Transportorgan 47 nach unten geneigten Schurrenboden 49 und zwei von diesem abgewinkelte, aufrechte Schurrenseitenwände 50. Das Transportorgan 47 und Teilbereiche der Zuführschurre 45, wie der geneigte Schurrenboden 49 und die beiden, um den Schurrenboden 49 im Abstand voneinander im Wesentlichen parallel zueinander angeordneten Schurrenseitenwände 50 begrenzen den zweiten Schöpfbereich 41 mit in etwa V-förmigem Querschnitt. Im zweiten Schöpfbereich 41 ist eine Teilmenge von vorvereinzelten, ungeordneten Langteilen 2 aus der Menge an ungeordneten Langteilen 2 der ersten Vereinzelungseinrichtung 11 angesammelt.

Die Teilmenge bzw. die von der ersten Vereinzelungseinrichtung 11 vorvereinzelten Langteile 2 fallen vom Bandförderer der ersten Vereinzelungseinrichtung 11 auf den Schurrenboden 49 hinab und rutschen entlang diesem selbsttätig in Richtung auf das Transportorgan 47 und werden mit dem angetriebenen Transportorgan 47 vom zweiten Schöpfbereich 41 zu einem oberhalb des Schöpfbereiches 41 ausgebildeten Abgabebereich 51, insbesondere Abwurfstelle, befördert.

Der Rahmen 48 besteht aus zwei im Wesentlichen identischen und quer zur Förderrichtung - gemäß Pfeil 9 - im Abstand voneinander angeordneten Seitenteilen 52 sowie mehreren diese verbindenden Querträgern 53. Die zweite Vereinzelungseinrichtung 12 ist über zwischen dem Rahmen 48 und den Profilen 5 des Grundrahmens 6 angeordnete Kupplungs- und Verbindungselemente, beispielsweise Schraubenverbindung, Zentrierbolzen und dgl. lösbar mit dem Grundrahmen 6 verbunden.

Die zweite Vereinzelungseinrichtung 12 weist, wie aus der Zusammenschau der Fig. 3 bis 5 ersichtlich, zwei quer zur Förderrichtung - gemäß Pfeil 9 - in einem etwa der Breite des Transportorganes 47 entsprechenden Abstand voneinander angeordnete, endlos umlaufende Antriebsorgane 54 und das mit diesen bewegungsgekoppelte Transportorgan 47 sowie einen Antrieb 55, beispielsweise einen Elektromotor, auf. Die beidseitig zum Transportorgan 47 angeordneten Antriebsorgane 54 sind durch ein Zugmittel, wie beispielsweise eine Antriebskette, einen Gurt, einen Zahnriemen oder dgl., gebildet und synchronisiert angetrieben. Gemäß diesem Ausführungsbeispiel sind die beiden Antriebsorgane 54 jeweils über zumindest ein an jedem der Seitenteile 52 gelagertes Umlenkrad 56 und Antriebsrad 57 geführt. Die Umlenkräder 56 sind frei drehbar gelagert, während die synchron antreibbaren Antriebsräder 56 über eine gemeinsame Antriebswelle 58 drehstarr miteinander gekoppelt sind. Die Antriebsräder 56 sind mit mindestens einem Antrieb 55 gekuppelt.

Die Antriebswelle 58 ist über einen Zugmitteltrieb mit dem Antrieb 55 gekoppelt. Dieser Zugmitteltrieb weist ein an dem Antrieb 55 gekuppeltes Antriebsrad 59 und ein an das freie Ende der Antriebswelle 58 angeflanschtes Umlenkrad 60 sowie ein um das Antriebs- und Umlenkrad 59, 60 geführtes Zugmittel 61, insbesondere eine Kette, ein Zahnriemen und dgl., auf. Der Zugmitteltrieb ist mit einem Schutzgehäuse 62 abgedeckt.

Die Paare von achsparallelen Umlenkrädern 56 und Antriebsrädern 57 sind um einen Vertikalabstand 63 distanziert angeordnet, sodass der Abgabebereich 51 oberhalb des tiefer gelegenen Schöpfbereiches 41 liegt und die Langteile 2 über das Transportorgan 47 entgegen der Wirkung der Schwerkraft vom Schöpfbereich 41 zu dem höher gelegenen Abgabebereich 51 befördert werden.

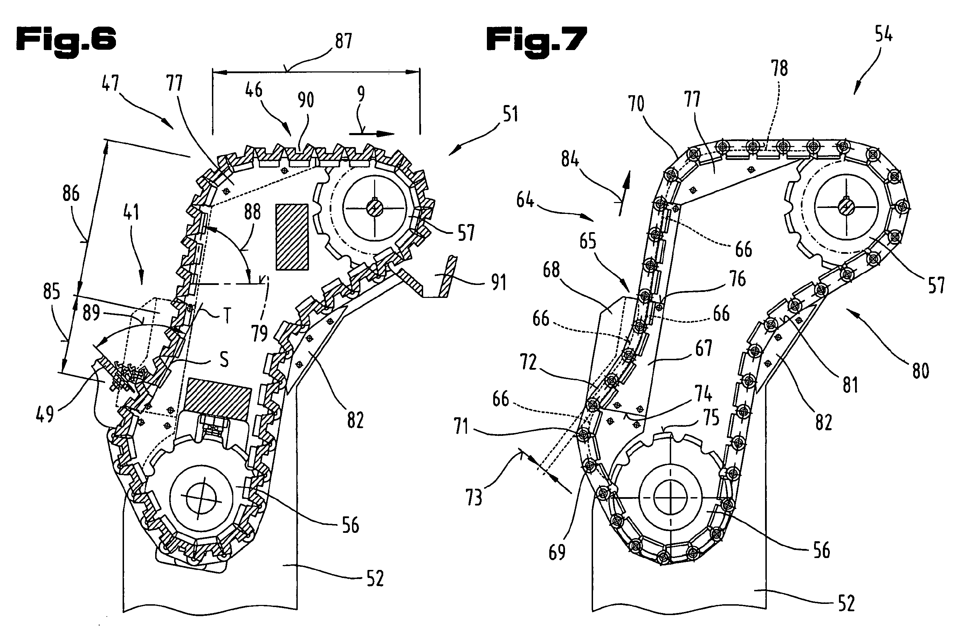

Wie aus der Zusammenschau der Fig. 6 und 7 ersichtlich, ist jedes Antriebsorgan 54, insbesondere die Antriebskette, im Bereich seines, dem zweiten Schöpfbereich 41 zugewandten Stranges 64 entlang einer, an einem jeden Seitenteil 52 des Rahmens 48 angeordneten und sich zwischen dem Umlenk- und Antriebsrad 56, 57 erstreckenden Kulissenbahn 65 geführt. Diese Kulissenbahn 65 ist, wie sie in Fig. 7 vergrößert dargestellt ist, zweckmäßig durch einen Schlitz gebildet, der von zwei einander gegenüberliegenden Führungsflächen 66 an zwei in einer Ebene angeordneten Plattensegmenten 67, 68 begrenzt ist. Die Plattensegmenten 67, 68 sind jeweils mit dem Seitenteil 52 des Rahmens 48 lösbar verbunden, insbesondere verschraubt. Das Antriebsorgan 54 wird durch den Schlitz hindurchgeführt und stützt sich an den einander gegenüberliegenden Führungsflächen 66 der Kulissenbahn 65 ab. Ist das Antriebsorgan 54, wie in der bevorzugten Ausführungsform gezeigt, durch eine über parallel verlaufende Bolzen 69 gelenkig miteinander verbundene Kettenglieder 70 bestehende Rollenkette gebildet, wälzen sich die an den Bolzen 69 drehbar gelagerten Rollen 71 an den Führungsflächen 66 ab. Somit ist jedes Antriebsorgan 54 über die Länge der Kulissenbahn 65 in zu den Führungsflächen 66 senkrechter Richtung zwangsgeführt. Die Kulissenbahn 65 erstreckt sich zwischen dem Umlenk- und Antriebsrad 56, 57 über eine Teillänge des dem zweiten Schöpfbereich 41 zugewandten Stranges 64 des Antriebsorganes 54 und weist eine durch die Führungsflächen 66 begrenzte Breite 73 quer zur Vorschubrichtung des Antriebsorganes 54 auf, die nach der Ausführung des Antriebsorganes 54 als Zahnriemen im Wesentlichen einer Dicke desselben oder nach der Ausführung als Rollenkette im Wesentlichen einem Durchmesser der Rolle 71 entspricht.

Eine Seitenführung jedes Antriebsorganes 54, insbesondere der Rollenkette, wird durch die an den Plattensegmenten 67, 68 seitlich vorstehenden Laschen 72 eines jeden Kettengliedes 70 bewerkstelligt. Um etwaige Beschädigungen am Antriebsorgan 54 während dem es durch die Kulissenbahn 65 hindurchgezogen wird, zuverlässig zu verhindern, ist ein dem Schurrenboden 49 bzw. dem Umlenkrad 56 benachbarter Einlaufbereich der Kulissenbahn 65 im Wesentlichen konisch ausgebildet, dessen Führungsflächen 66 sich in Richtung eines dem Einlaufbereich in Vorschubrichtung des Antriebsorganes 54 gegenüberliegenden Auslaufbereich auf die Breite 73 verjüngen. Über den in Vorschubrichtung des Antriebsorganes 54 konisch verjüngenden Einlaufbereich der Kulissenbahn 65, kann eine selbsttätige Zentrierung des Antriebsorganes 54, währenddem es durch die Kulissenbahn 65 hindurchgezogen wird, gegenüber der Kulissenbahn 65 erreicht werden.

Die erste Führungsfläche 66 des auf der dem Schöpfbereich 41 gegenüberliegenden Innenseite des Antriebsorganes 54 angeordneten, ersten Plattensegmentes 67 ragt an der im Einlaufbereich ausgebildeten, ersten Stirnseite 74 vor und erstreckt sich zwischen der ersten Stirnseite 74 und einer Eingriffsfläche 75 des Umlenkrades 56 für das Antriebsorgan 54 als dem Schöpfbereich 41 zugewandt, konvex gekrümmte Bogenfläche. Nach dieser bevorzugten Ausführung ist das Umlenkrad 56 ein Kettenrad und ist die Eingriffsfläche 75 durch eine Außenverzahnung gebildet.

Zweckmäßig ist auch ein dem Schurrenboden 49 bzw. dem Umlenkrad 56 entfernter Auslaufbereich der Kulissenbahn 65 im Wesentlichen konisch ausgebildet, dessen Führungsflächen 66 in Richtung einer der ersten Stirnseite 74 in Vorschubrichtung des Antriebsorganes 54 gegenüberliegenden, zweiten Stirnseite 76 divergieren. Zwischen dem Einlauf- und Auslaufbereich verlaufen die Führungsflächen 66 zweckmäßig parallel zueinander. Die sich zwischen der ersten Stirnseite 74 im Einlaufbereich und einer zweiten Stirnseite 76 im Auslaufbereich erstreckenden Führungsflächen 66 verlaufen dem Schöpfbereich 41 zugewandt, als konkav gekrümmte Bogenfläche.

Ausgehend von der zweiten Stirnseite 76 im Auslaufbereich in Richtung zum freien Ende des ersten Plattensegmentes 67, verläuft die dem Schöpfbereich 41 zugewandte Führungsfläche 66 geradlinig. Das dem Schöpfbereich 41 benachbarte, zweite Plattensegment 68 begrenzt mit seinen parallelen Stirnseiten 74, 76 eine Länge der Kulissenbahn 65 und ist die Kulissenbahn 65 nur über eine Teillänge des von dieser geführten Stranges vom jeweiligen Antriebsorgan 54 angeordnet.

Wie in den Fig. 6 und 7 ebenfalls ersichtlich, ist zwischen dem ersten Plattensegment 67 und dem Antriebsrad 57 ein mit dem Rahmen 48, insbesondere jeweils mit dem Seitenteil 52, verbundenes, drittes Plattensegment 77 angeordnet, das an der dem Schurrenboden 49 bzw. Antriebsrad 57 gegenüberliegenden Schmalseite eine an die Führungsfläche 66 des ersten Plattensegmentes 67 unterbrechungsfrei anschließende und sich bis vor das Antriebsrad 57 erstreckende Führungsfläche 78 ausbildet. Diese Führungsfläche 78 verläuft in einem dem ersten Plattensegment 67 näher gelegenen Teilabschnitt, dem Schöpfbereich 41 zugewandt, konvex gekrümmt und daran anschließend geradlinig, insbesondere parallel zu einer Horizontalebene 79. Das Antriebsorgan 54 ist an der Führungsfläche 78 abgestützt. Ist das Antriebsorgan 54 in einer bevorzugten Ausführungsform durch eine Rollenkette gebildet, so wälzen sich die an den Bolzen 69 drehbar gelagerten Rollen 71 an der Führungsfläche 78 ab und erfolgt über die beidseits an dem dritten Plattensegment 77 vorstehenden Laschen 72 eine zuverlässige Seitenführung der Rollenkette.

Ein zwischen dem Umlenk- und Antriebsrad 56, 57 ausgebildeter und dem Schöpfbereich 41 gegenüberliegend angeordneter, insbesondere rücklaufender Strang 80 jedes Antriebsorganes 54, insbesondere der Rollenkette, ist an einer dem Schöpfbereich 41 zugewandt, konvex gekrümmten Führungsfläche 81 einer am Rahmen 48, insbesondere an den jeweiligen Seitenteilen 52 befestigten Stützplatte 82 geführt. Das Antriebsorgan 54 stützt sich mit ihren Laschen 72 an der Führungsfläche 81 der jeweiligen Stützplatte 82 ab.

Wie ebenfalls in den Fig. 3 und 4 ersichtlich, ist zwischen jedem Umlenkrad 56 und dem Rahmen 48, insbesondere dem jeweiligen Seitenteil 52, eine mechanisch betätigte Spanneinheit 83 angeordnet.

Die in Vorschubrichtung - gemäß Pfeil 84 - synchron angetriebenen Antriebsorgane 54 und die mit den einzelnen Kettengliedern 70 bewegungsgekoppelten Mitnahmeorgane 46 werden entsprechend dem Verlauf der Führungsflächen 66, 77, 81 entlang einer Bewegungsbahn geführt und am Umlenk- und Antriebsrad 56, 57 sowie an der Kulissenbahn 65 umgelenkt. Somit erfährt das Transportorgan 47 den identen Bewegungsverlauf wie die beidseitig zum Transportorgan 47 angeordneten Antriebsorgane 54.

Wie in Fig. 6 eingetragen, ist ein dem Schöpfbereich 41 benachbarter und sich zwischen diesem und dem Abgabebereich 51 erstreckender, insbesondere gezogener Strang, des aus einer Vielzahl von gelenkig miteinander verbundenen Mitnahmeorganen 46 bestehenden Transportorganes 47, in einen Mitnahmeabschnitt 85, Ausscheideabschnitt 86 und Austragabschnitt 87 unterteilt. Diese sind in Förderrichtung - gemäß Pfeil 9 - unmittelbar hintereinander und aneinander angrenzend ausgebildet. Der Mitnahmeabschnitt 85 erstreckt sich im Wesentlichen über die Länge der durch die Stirnseiten 74, 76 begrenzten Kulissenbahn 65 und verläuft dem Schöpfbereich 41 zugewandt, in etwa konkav gekrümmt, insbesondere kreisbogenförmig, während der in Vorschubrichtung - gemäß Pfeil 84 - nachgeordnete Ausscheideabschnitt 86 über weite Teile im Wesentlichen geradlinig und in Bezug auf die in strichpunktierte Linien eingetragene Horizontalebene 79 unter einem Neigungswinkel 88 verläuft. Der Neigungswinkel 88 des Ausscheideabschnittes 86 ist kleiner 90° und beträgt bevorzugt zwischen 60 ° und 85 °, insbesondere zwischen 70 ° und 80 °, beispielsweise 75 °. Ein zwischen einer im Scheitelpunkt "S" des konkaven Mitnahmeabschnittes 85 angelegten Tangente "T" und einem Schurrenboden 49 der Zuführschurre 45 eingeschlossener Winkel 89 beträgt kleiner 90 °, insbesondere zwischen 60 ° und 80 °, beispielsweise 75 °. Dabei ist die Länge des Mitnahmeabschnittes 85 im Wesentlichen durch die Länge der Kulissenbahn 65 begrenzt.

Im Mitnahmeabschnitt 85 werden über die Mitnahmeorgane 46 aus der im Schöpfbereich 41 lagernden Teilmenge vorvereinzelter Langteile 2, einzelne Langteile 2 abgestreift und von einer noch näher zu beschreibenden, im Querschnitt einen etwa trapezförmigen Querschnitt aufweisenden Vertiefungsnut 90 aufgenommen und nach oben zum Abgabebereich 51 befördert.

Der geneigte Ausscheideabschnitt 86 dient dazu, dass für den Fall, wenn zwei oder mehrere Langteile 2 zusammenhängen und/oder ineinander verhaken, wie dies bei einer asymmetrischen Teilegeometrie des in Fig.1 und 2 dargestellten Langteiles 2 durchaus eintreten kann, und diese von einem vorbeistreifenden Mitnahmeorgan 46 erfasst und nach oben mitbefördert werden, aufgrund der Verlagerung der Schwerpunktslage dieser zusammenhängenden und/oder verhakten Langteile 2 außerhalb der Vertiefungsnut 90, in den Schöpfbereich 41 zurück geführt werden, insbesondere hinabfallen. Dadurch wird eine zuverlässige Vereinzelung der Langteile 2 aus der Teilmenge im Schöpfbereich 41 in einer quer zur Längserstreckung der Langteile 2 verlaufenden Förderrichtung - gemäß Pfeil 9 - erreicht.

Der in Förderrichtung - gemäß Pfeil 9 - dem Ausscheideabschnitt 86 unmittelbar nachgeordnete Austragabschnitt 87 verläuft über weite Teile im Wesentlichen geradlinig und parallel zur Horizontalebene 79. Im Umlenkbereich des Transportorganes 47 ist der Abgabebereich 51 ausgebildet, von dem aus die vereinzelten Langteile 2 über einen Fallschacht 91 der ersten Abfördereinrichtung 13 zugeführt werden.

Wie in Fig. 3 und 4 weiters eingetragen, ist oberhalb des Transportorganes 47 eine in Bezug auf die Horizontalebene 79 nach unten geneigte Ablenkplatte 92 angeordnet. Diese Ablenkplatte 92 erstreckt sich zwischen den beiden Schurrenseitenwänden 50 und werden die von der ersten Vereinzelungseinrichtung 11 gegebenenfalls auf die Ablenkplatte 92 hinabfallenden Langteile 2 in den Schöpfbereich 41 bzw. Bereich des Mitnahmeabschnittes 85 abgelenkt. Damit ist das störungsfreie Fördern der gegebenenfalls bereits vereinzelten Langteile 2 entlang des Ausscheide- und Austragabschnittes 86, 87 bewerkstelligt. Wie weiters dargestellt, erstrecken sich zwischen den beiden im Abstand voneinander angeordneten Schurrenseitenwänden 50 aufrechte und parallel zu den Mitnahmeorganen 46 verlaufende Seitenwände 93, die gemeinsam mit der Zuführschurre 45 den Vorratsbehälter 44 begrenzen bzw. bilden. Um die Vereinzelungseinrichtungen 11, 12 gegeneinander positionieren zu können, ist die erste Vereinzelungseinrichtung 11 über zwei Linearführungen 94 am Grundrahmen 6 verschiebbar gelagert und kann in Richtung auf die zweite Vereinzelungseinrichtung 12 zugestellt und von dieser hinweg verstellt werden.

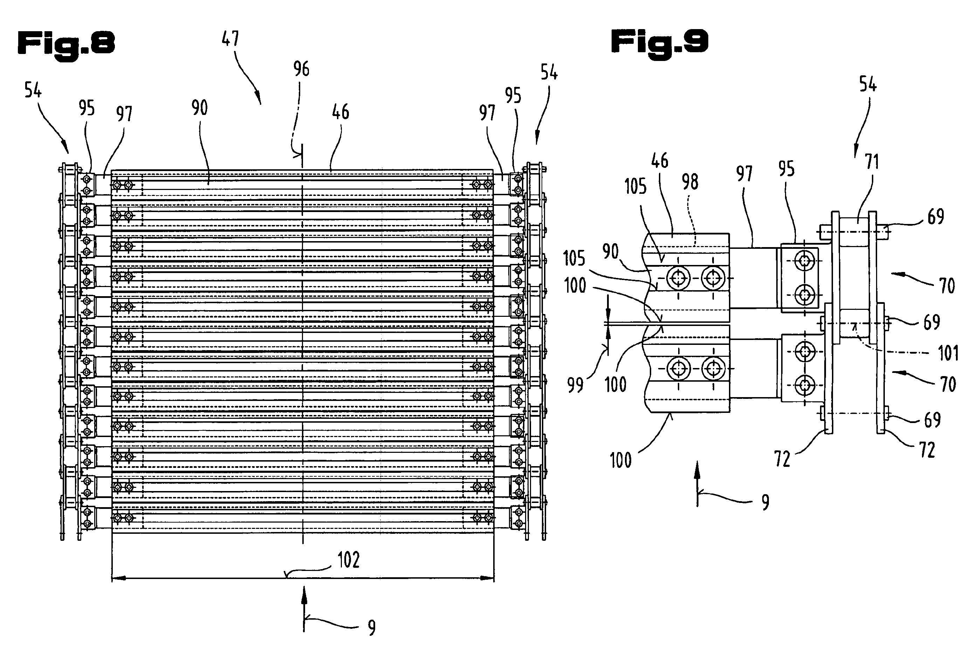

In den gemeinsam beschriebenen Fig. 8 und 9 ist ein Teilabschnitt des Transportorganes 47 mit den Mitnahmeorganen 46 und der beidseitig zu diesem angeordneten Antriebsorganen 54, insbesondere Antriebsketten, gezeigt. Die Antriebsketten sind jeweils durch die über parallel zueinander verlaufenden Bolzen 69 gelenkig miteinander verbundene Kettenglieder 70 gebildet und jeweils über das zumindest eine Umlenkrad 56 und zumindest eine Antriebsrad 57 (wie in den Fig. 4 und 7 dargestellt) geführt. Diese Antriebsketten sind jeweils durch einen Rollenkette mit Befestigungslaschen 95 gebildet und quer zur Förderrichtung der Langteile 2 - gemäß Pfeil 9 - im Abstand voneinander sowie in Bezug auf eine vertikale Längsmittelebene 96 des Transportorganes 47 spiegelbildlich zueinander angeordnet. An den Befestigungslaschen 95 ist jeweils eine Anschlussplatte 97 über mindestens ein erstes Verbindungselement befestigt, insbesondere verschraubt oder vernietet. Die sich zwischen den einander gegenüberliegenden Antriebsketten erstreckenden Mitnahmeorgane 46 sind auf einer streifenartigen Trägerplatte 98 über mindestens ein zweites Verbindungselement, insbesondere eine Schraube, Niete, Rast- und/oder Schnappverbindung, lösbar befestigt. Die Trägerplatte 98 ist mit deren Enden über Verbindungselemente mit den in Förderrichtung - gemäß Pfeil 9 - in einem Abstand hintereinander und in einer zur Förderrichtung - gemäß Pfeil 9 - quer verlaufenden Ebene paarweise angeordneten Anschlussplatten 97 lösbar verbunden.

Wie in Fig. 9 vergrößert dargestellt, ist zwischen zwei in Förderrichtung - gemäß Pfeil 9 - hintereinander angeordneten Mitnahmeorganen 46 ein Abstandsspalt 99 ausgebildet, der von zwei einander gegenüberliegenden und parallel zueinander verlaufenden, ebenen Längskanten 100 der unmittelbar aufeinander folgenden Mitnahmeorgane 46 begrenzt und kleiner ist, als die minimale Querschnittsabmessung 34 des Langteiles 2 (wie in Fig. 1 eingetragen). Die Längskanten 100 sind dabei symmetrisch zu einer Gelenkachse 101 zweier gelenkig miteinander verbundener Kettenglieder 70 angeordnet. Andererseits können die Mitnahmeorgane 46 jeweils auch unmittelbar mit den in Bezug auf die Längsmittelebene 96 spiegelbildlich gegenüberliegenden Anschlussplatten 97 verbunden sein und die Trägerplatte 98 entfallen.

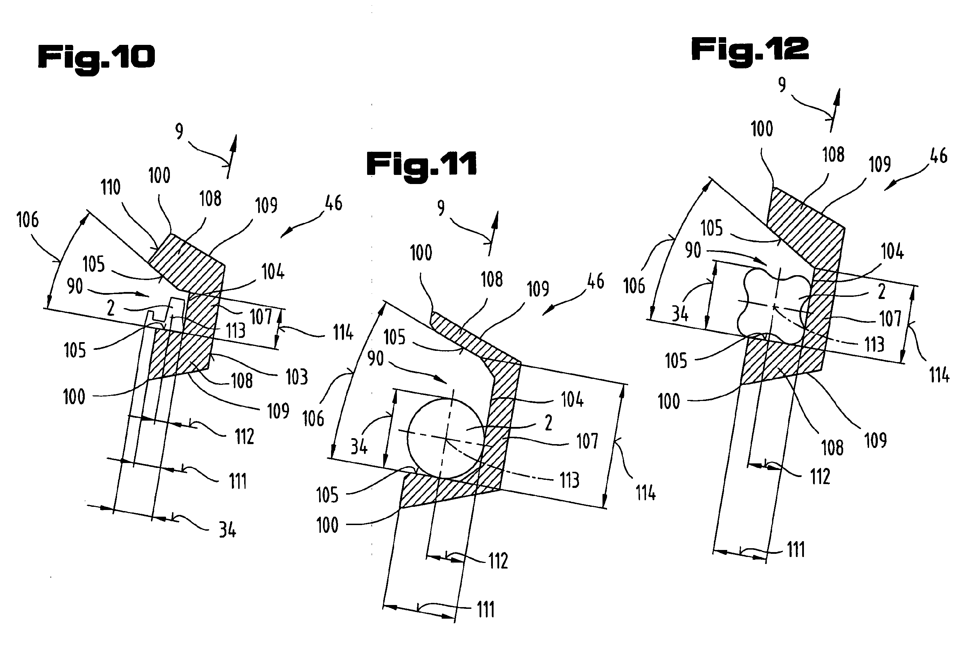

In den gemeinsam beschriebenen Fig. 10 bis 12 sind unterschiedliche Ausführungen des Mitnahmeorganes 46 vom Transportorgan 47 in Querschnittsdarstellung gezeigt, wobei das Mitnahmeorgan 46 nach der Ausführung in Fig. 10 insbesondere für im Querschnitt asymmetrische Langteile 2 geeignet ist, während die Mitnahmeorgane 46 nach den Ausführungen in Fig. 11 und 12 für im Querschnitt symmetrische Langteile 2 eingesetzt werden. Alle Mitnahmeorgane 46 des Transportorganes 47 sind identisch ausgebildet und weisen jeweils zumindest eine in deren Längsrichtung erstreckende, einen etwa trapezförmigen Querschnitt aufweisende Vertiefungsnut 90 auf. Die Vertiefungsnut 90 erstreckt sich zweckmäßig durchgehend und annähernd über die gesamte Länge 102 (wie in Fig. 8 eingetragen) des Mitnahmeorganes 46 und ist durch einen im Wesentlichen parallel zu einer den Antriebsorganen 54 zugewandten Montagefläche 103 verlaufenden Nutboden 104 und geneigt aufeinander zulaufende Führungsflächen 105 begrenzt. Die Ebenen der beiden Führungsflächen 105 schließen einen Winkel 106 von kleiner 90 ° ein und beträgt insbesondere zwischen 20 ° und 60 °, beispielsweise 30 °. Die Länge 102 der Mitnahmeorgane 46 bestimmt die Breite des Transportorganes 47.

Die Vertiefungsnut 90 weist eine Länge auf, die zumindest dem Doppelten der maximalen Länge 32 des Langteiles 2 entspricht. Somit können in der Vertiefungsnut 90 eines Mitnahmeorganes 46 zumindest zwei Langteile 2 in deren Längserstreckung hintereinander aufgenommen werden. Andererseits kann die Länge der Vertiefungsnut 90 auch einem Mehrfachen der maximalen Länge 32 des Langteiles 2 entsprechen und beispielsweise drei, vier Langteile 2 in deren Längserstreckung hintereinander aufnehmen.

Jedes Mitnahmeorgan 46 vom Transportorgan 47 weist einen etwa C-Profilquerschnitt und eine zu den Antriebsorganen 54 bzw. Antriebsketten benachbarte Basis 107 und zwei an der Basis 107 abkragende Schenkel 108 auf.

Das Mitnahmeorgan 46, insbesondere der erste und zweite Schenkel 108, bilden in Förderrichtung - gemäß Pfeil 9 - einander gegenüberliegende und geneigt zueinander verlaufende Schmalseiten 109 aus, die ausgehend von den freien Enden des ersten und zweiten Schenkels 108 in Richtung der Montagefläche 103 aufeinander zulaufen. Diese Ausbildung hat den Vorteil, dass selbst bei kleinen Umlenkradien des Transportorganes 47, die in Förderrichtung - gemäß Pfeil 9 - hintereinander angeordneten Mitnahmeorgane 46 nicht einander kollidieren.

Der in Förderrichtung - gemäß Pfeil 9 - vordere, erste Schenkel 108 überragt mit seinem freien Ende den in Förderrichtung - gemäß Pfeil 9 - hinteren, zweiten Schenkel 108 und bildet an seinem freien Ende eine geneigt zum Nutboden 104 verlaufende Abweiserfläche 110 aus. Der Nutboden 104 und die Abweiserfläche 110 schließen einen Winkel ein, der kleiner 90 °, insbesondere zwischen 10 ° und 60 °, beispielsweise 30 °, beträgt.

Eine minimale Tiefe 111 der Vertiefungsnut 90 ist zumindest geringfügig größer ausgebildet, als ein zwischen dem Nutboden 104 und einem in der Querschnittsebene liegenden Flächenschwerpunkt 113 des einzelnen Langteiles 2 gemessener, maximaler Normalabstand 112. Eine maximale Tiefe 111 der Vertiefungsnut 90 entspricht annähernd der maximalen Querschnittsabmessung 34 des Langteiles 2. Eine minimale Breite 114 der Vertiefungsnut 90 ist zumindest geringfügig größer bemessen als eine maximale Querschnittsabmessung 34 des Langteiles 2 und/oder entspricht annähernd der maximalen Querschnittsabmessung 34 des Langteiles 2. Eine maximale Breite 114 der Vertiefungsnut 90 ist jedoch kleiner bemessen als die Doppelte, minimale Querschnittsabmessung 34 des Langteiles 2. Mit diesen Abmessungen wird sichergestellt, dass die Vertiefungsnut 90 eines Mitnahmeorganes 46 in der Querschnittsebene betrachtet, immer nur einen vereinzelten Langteil 2 aufnimmt. Da nun alleinig aufgrund der Geometrie der Vertiefungsnut 90 während dem Vorbeistreifen der Mitnahmeorgane 46 an den ungeordneten Langteilen 2 im Schöpfbereich 41, aus der Teilmenge größtenteils nur einzelne Langteile 2 erfasst und hochbefördert werden, wird eine optimale Vereinzelung bei gleichzeitig hoher Austragleistung von vereinzelten Langteilen 2 an der zweiten Vereinzelungseinrichtung 12 erreicht.

Fig. 11 zeigt eine andere Ausführungsvariante des Mitnahmeorganes 46 mit dem in der Vertiefungsnut 90 aufgenommenen Langteil 2, der in Form eines stangenartigen Rundprofils, das unterschiedliche Querschnittabmessungen 34 aufweisen kann, ausgebildet ist.

Fig. 12 zeigt eine weitere Ausgestaltung des Mitnahmeorganes 46 mit dem in der Vertiefungsnut 90 aufgenommenen, ein im Querschnitt kleeblattförmiges Profil aufweisenden Langteiles 2.

Der Aufbau der Mitnahmeorganes 46 nach Fig. 11 und 12 entspricht im Wesentlichen jenem Aufbau, wie er in Fig. 10 dargestellt ist. Gemäß diesen Ausführungen weisen sowohl der erste als auch der zweite Schenkel 108 eine gleiche Höhe auf, da im Gegensatz bei der Beförderung von asymmetrischen Langteilen 2 - gemäß Fig. 10 - bei der Beförderung von symmetrischen Langteilen 2 - gemäß Fig. 11 und 12 - ein Verhaken der vom Ausscheideabschnitt 86 (siehe Fig. 3) in Richtung des Mitnahmeabschnittes 85 (siehe Fig. 3 und 6) hinabfallenden, verhakten Langteile 2 mit den in der Vertiefungsnut 90 aufgenommenen, vereinzelten Langteilen 2 nicht eintreten kann.

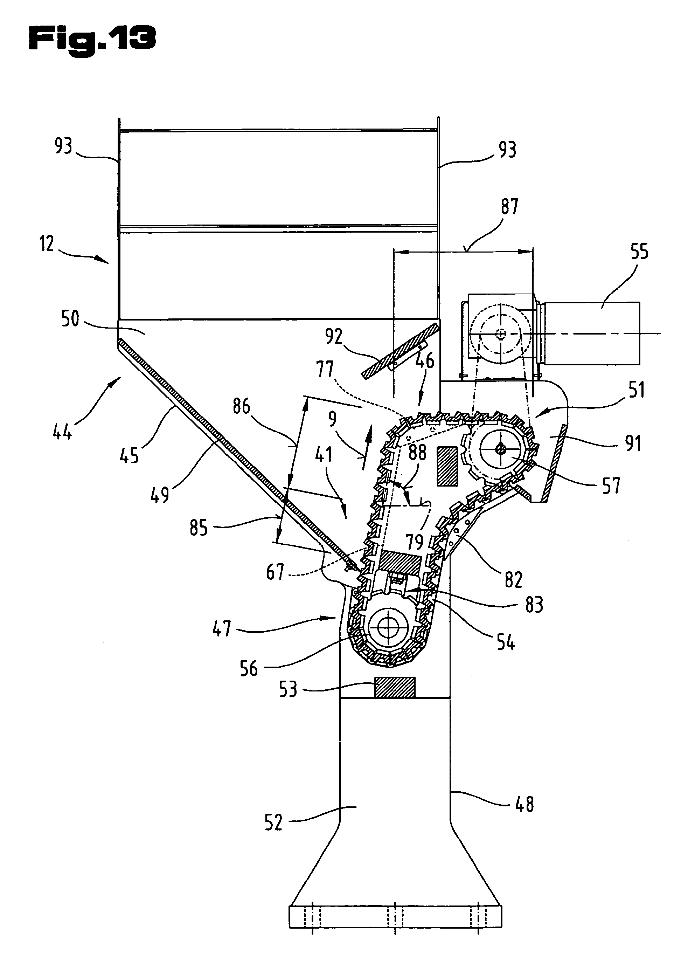

In der Fig. 13 ist eine andere Ausführung der zweiten Vereinzelungseinrichtung 12 zum Fördern und Vereinzeln von Langteilen 2 aus einer Teilmenge in einer zu deren Längserstreckung quer verlaufenden Förderrichtung - gemäß Pfeil 9 - in Seitenansicht und geschnitten dargestellt. Aus Gründen der besseren Übersicht, sind die Langteile 2 nicht dargestellt. Die Vereinzelungseinrichtung 12 weist einen Vorratsbehälter 44 mit der zweiten Zuführschurre 45 und ein aus einer Vielzahl von gelenkig miteinander verbundenen Mitnahmeorganen 46 bestehendes, endlos umlaufendes Transportorgan 47 sowie einen Rahmen 48 auf.

Die Zuführschurr 45 umfasst wiederum den in Richtung zum Transportorgan 47 nach unten geneigten Schurrenboden 49 und zwei von diesem abgewinkelte, aufrechte Schurrenseitenwände 50. Das Transportorgan 47, der geneigte Schurrenboden 49 und die beiden, um den Schurrenboden 49 im Abstand voneinander im Wesentlichen parallel zueinander angeordneten Schurrenseitenwände 50 begrenzen den zweiten Schöpfbereich 41 mit in etwa V-förmigem Querschnitt. Ein dem Schöpfbereich 41 benachbarter und sich zwischen diesem und dem Abgabebereich 51 erstreckender, insbesondere gezogener Strang des Transportorganes 47 ist in den Mitnahmeabschnitt 85, Ausscheideabschnitt 86 und Austragabschnitt 87 unterteilt. Nach dieser Ausführungsform ist der Mitnahmeabschnitt 85 in Verlängerung zum Ausscheideabschnitt 86 und im Wesentlichen geradlinig ausgebildet und beträgt der Neigungswinkel 88 in Bezug zu der in strichpunktierten Linien eingetragenen Horizontalebene 79 kleiner 90 °, bevorzugt zwischen 60 ° und 85 °, insbesondere zwischen 70 ° und 80 °, beispielsweise 75 °. Der in Förderrichtung - gemäß Pfeil 9 - dem Ausscheideabschnitt 86 unmittelbar nachgeordnete Austragabschnitt 87 verläuft über weite Teile im Wesentlichen geradlinig und parallel zur Horizontalebene 79. Im Umlenkbereich des Transportorganes 47 ist der Abgabebereich 51 für die vereinzelten Langteile 2 ausgebildet.

Das Transportorgan 47 ist auch bei dieser Ausführung mit beidseitig zu diesem angeordneten Antriebsorganen 54, insbesondere Antriebsketten, Antriebsriemen etc., bewegungsmäßig gekoppelt. Jedes der beiden Antriebsorgane 54 bzw. jede der beiden Antriebsketten ist wiederum an nicht weiters eingetragenen Führungsflächen 66, 78 an einem ersten und dritten Plattensegment 67, 77 abgestützt, insbesondere wälzen sich die Rollen 71 der Antriebskette an den Führungsflächen 66, 78 ab. Die dem Schöpfbereich 41 zugewandte Führungsfläche 66 verläuft dabei geradlinig bzw. ebenflächig und geneigt zur Horizontalebene 79. Der Aufbau und die Funktion der zweiten Vereinzelungseinrichtung 12 wurde bereits oben detailliert beschrieben und kann auf diese Ausbildung übertragen werden.

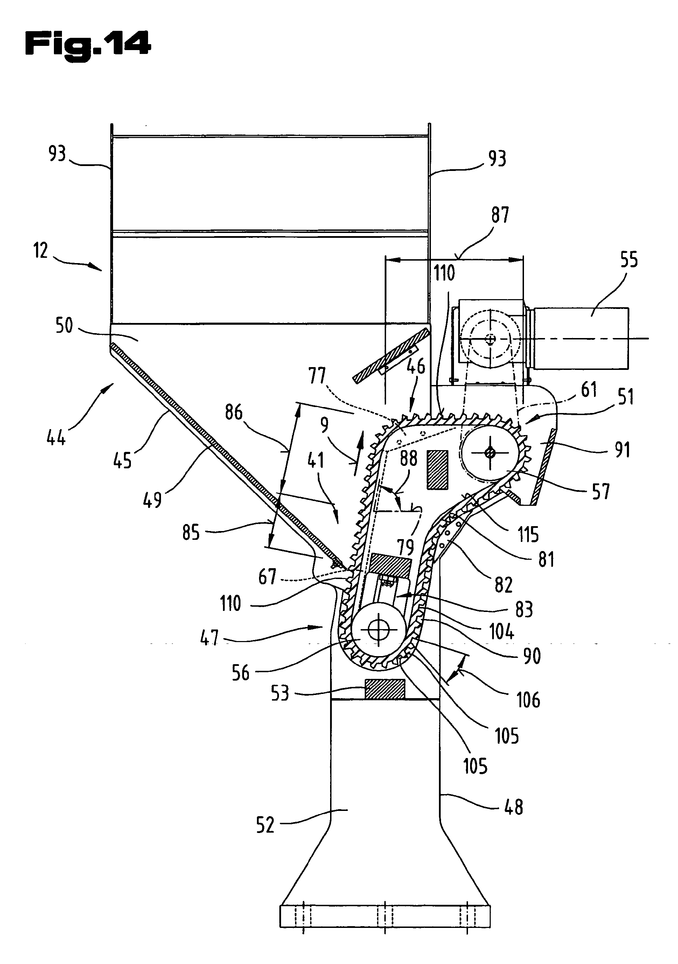

In der Fig. 14 ist eine weitere Ausführungsvariante der zweiten Vereinzelungseinrichtung 12 zum Fördern und Vereinzeln von Langteilen 2 aus einer Teilmenge in einer zu deren Längserstreckung quer verlaufenden Förderrichtung - gemäß Pfeil 9 - in Seitenansicht, geschnitten und stark vereinfacht gezeigt. Aus Gründen der besseren Übersicht, sind die Langteile 2 nicht dargestellt. Das Transportorgan 47 ist gemäß dieser Ausführung durch ein endloses Transportband, insbesondere ein Zugmittel, wie Riemen gebildet, das unmittelbar um zumindest ein Umlenkrad 56 und zumindest ein Antriebsrad 57 geführt ist. Dieses Transportband ist auf einer, dem Schöpfbereich 41 zugewandten Außenseite mit den Mitnahmeorganen 46 versehen, insbesondere mit dem Transportband einstückig verbunden. Jedes Mitnahmeorgan 46 weist an seiner, dem Schöpfbereich 41 zugewandten Außenseite wenigstens eine, sich zumindest über einen Teil der Breite des Transportbandes erstreckende und in Richtung des Schöpfbereiches 41 geöffnete Vertiefungsnut 90 mit etwa trapezförmigen Querschnitt auf. Eine Länge der Vertiefungsnut 90 entspricht zumindest dem Doppelten der maximalen Länge 32 des Langteiles 2 (siehe Fig. 2). Die Mitnahmeorgane 46 und Vertiefungsnuten 90 verlaufen parallel zueinander und quer zur Förderrichtung - gemäß Pfeil 9 - der Langteile 2. Damit können in der Vertiefungsnut 90 eines Mitnahmeorganes 46 zumindest zwei Langteile 2 in deren Längserstreckung hintereinander quer zur Förderrichtung - gemäß Pfeil 9 - aufgenommen werden.

Die Vertiefungsnut 90 ist durch den Nutboden 104 und die geneigt aufeinander zulaufenden Führungsflächen 105 begrenzt, wobei die Ebenen der beiden Führungsfläche 105 den Winkel 106 von kleiner 90 ° einschließen. Der Winkel 106 beträgt insbesondere zwischen 20 ° und 60 °, beispielsweise 30 °.

Das antreibbare Transportband ist gemäß dieser Ausführung nach Fig. 14 auf einer dem Umlenk- und Antriebsrad 56, 57 zugewandten Innenseite mit einer ebenen Eingriffsfläche 115 versehen, die sich an den nicht eingetragenen Führungsflächen 66, 78, 81 der Plattensegmente 67, 77 und Stützplatte 82 abstützt bzw. entlang diesen geführt und an den Umlenk- und Antriebsrädern 56, 57 umgelenkt ist. Dabei sind das Umlenk- und Antriebsrad 56, 57 als walzenartige Riemenscheiben ausgebildet. Eine andere Ausführung besteht darin, dass die Eingriffsfläche 115 mit einem Profil, insbesondere einer Verzahnung, versehen ist, wobei die Zähne in die jeweiligen Zahnlücken der als Zahnscheiben ausgebildeten Umlenk- und Antriebsräder 56, 57 eingreifen und somit einen Formschluss herstellen. Ebenso können im endlos gefertigten Transportband über die gesamte Riemenbreite Zugelemente aus Stahl oder Glasfasern, Aramidfasern und dgl. angeordnet sein, wie dies jedoch nicht weiters dargestellt ist.

Der dem Schöpfbereich 41 benachbarte und sich zwischen diesem und dem Abgabebereich 51 erstreckende, insbesondere gezogene Strang des Transportorganes 47 ist in den Mitnahmeabschnitt 85, Ausscheideabschnitt 86 und Austragabschnitt 87 unterteilt. Nach dieser Ausführungsform ist der Mitnahmeabschnitt 85 in Verlängerung zum Ausscheideabschnitt 86 und im Wesentlichen geradlinig ausgebildet und beträgt der Neigungswinkel 88 in Bezug zur Horizontalebene 79 kleiner 90°, bevorzugt zwischen 60 ° und 85 °, insbesondere zwischen 70 ° und 80 °, beispielsweise 75 °. Der dem Ausscheideabschnitt 86 nachgeordnete Austragabschnitt 87 verläuft über weite Teile im Wesentlichen geradlinig und parallel zur Horizontalebene 79. Andererseits kann der Mitnahmeabschnitt 85, wie in den vorangegangenen Fig. erläutert, auch dem Schöpfbereich 41 zugewandt, in etwa konkav gekrümmt, insbesondere kreisbogenförmig, ausgebildet sein.

Die Beförderung der Langteile 2 von der zweiten Vereinzelungseinrichtung 12 an die erste Abfördereinrichtung 13 wird im Nachfolgenden kurz erläutert. Die von der ersten Vereinzelungseinrichtung 11 in den Schöpfbereich 41 der zweiten Vereinzelungseinrichtung 12 intermittierend geförderte Teilmenge von ungeordneten Langteilen 2 wird über die zweite Vereinzelungseinrichtung im Wesentlichen vollständig zu einzelne Langteile 2 vereinzelt und über den Fallschacht 91, der in Förderrichtung - gemäß Pfeil 9 - nachgeordneten, ersten Abfördereinrichtung 13 zugeführt. Wie in Fig. 4 und 5 eingetragen, ist die zweite Vereinzelungseinrichtung 12 im zweiten Schöpfbereich 41 mit mindestens einem Überwachungsorgan 116 in Form eines Sensors, beispielsweise Lichtschranken, elektromagnetischer Näherungsschalter oder dgl., für die Überwachung eines Füllstandes im zweiten Schöpfbereich 41 ausgestattet. Sofern der Soll-Füllstand im zweiten Schöpfbereich 41 unterschritten wird, wird die erste Zufördereinrichtung 11 angetrieben, sodass eine Teilmenge von Langteilen 2 dem zweiten Schöpfbereich 41 zugeliefert werden, solange bis der Soll-Füllstand im zweiten Schöpfbereich 41 erreicht oder geringfügig überschritten ist, worauf die erste Vereinzelungseinrichtung 11 gegebenenfalls abgeschalten wird. Dabei fallen die Langteile 2 vom Bandförderer der ersten Vereinzelungseinrichtung 11 auf den geneigten Schurrenboden 49 hinab und rutschen in Richtung des Transportorganes 47 der zweiten Vereinzelungseinrichtung 12 und füllen den Schöpfbereich 41 mindestens bis zum Soll-Füllstand auf. Wie weiters in Fig. 4 eingetragen, ist die zweite Vereinzelungseinrichtung 12 im Abgabebereich 51 mit zwei Überwachungsorganen 117 in Form von optischen Sensoren, beispielsweise Lichtschranken, elektromagnetischer Näherungsschalter oder dgl., für die Überwachung eines Belegungszustandes in der Vertiefungsnut 90 mit einem oder zwei Langteilen 2 und usw. ausgestattet. Die Überwachungsorgane 117 sind nahe den Kanten des endlosen Transportorganes 47 und beidseitig zu diesem angeordnet.

Die an den Abgabebereich 51 hochgeförderten, vereinzelten Langteile 2, fallen auf das Förderband der ersten Abfördereinrichtung 13 hinab und werden zu der in Förderrichtung - gemäß Pfeil 9 - nachgeordneten Ausrichtvorrichtung 14 für die vereinzelten Langteile 2 befördert.

Sofern der Langteil 2 der Ausrichtvorrichtung 14 in Bezug auf seine Bereitstellungsposition lagefalsch zugeführt wird, wird dieser während seiner Vorschubbewegung in Förderrichtung - gemäß Pfeil 9 - selbsttätig in die in Bezug auf die Schwerpunktlage richtig orientierte Bereitstellungslage gekippt. Darauffolgend wird der vereinzelte und richtig orientierte Langteil 2 der in Förderrichtung - gemäß Pfeil 9 - nachgeordneten, zweiten Abfördereinrichtung 15 zugeführt.

Im Gegensatz dazu, wird, wenn der vereinzelte Langteil 2 aus der ersten Abfördereinrichtung 13 der Ausrichtvorrichtung 14 in der richtig orientierten, vorbestimmten Bereitstellungslage zugeführt wird, der richtig orientierte Langteil 2 in der Ausrichtvorrichtung 14 unverändert hindurchgeschleust und in Bezug auf den Schwerpunkt des Langteiles 2 lagerichtig an die zweite Abfördereinrichtung 15 gefördert.

Der in seiner Schwerpunktslage richtig orientierte Langteil 2 wird über die weitere Abfördereinrichtung 15 von der Ausrichtvorrichtung 14 abtransportiert. Wie in der Fig. 2 als Block schematisch eingetragen, ist im Bereich der zweiten Abfördereinrichtung 15 mindestens ein Kamerasystem 153, insbesondere eine Zeilenkamera, CCD-Kamera (Charge-Coupled-Device-Kamera) angeordnet, mit dessen Hilfe der vorbeilaufende Langteil 2 detektiert wird. Anhand der erfassten Bilddaten kann nun eine Verifizierung bzw. ein Soll-Ist-Vergleich in einer elektronischen Steuereinrichtung durchgeführt werden. Wird am Langteil 2 eine Beschädigung festgestellt oder dieser als Fremdteil erfasst, wird er über eine nicht weiters dargestellte Ausschleuseinrichtung, beispielsweise mittels einem quer zur Förderichtung - gemäß Pfeil 9 - gerichteten Druckluftstrom oder einer quer zur Förderichtung - gemäß Pfeil 9 - verstellbaren, mechanischen Weiche, in einen seitlich neben der zweiten Abfördereinrichtung 15 angeordneten Schlechteilebehälter 154 ausgeschleust.

Wenn der am Kamerasystem 153 vorbeigeführte Langteil 2, in seiner räumlichen Lage falsch orientiert ist, insbesondere das vordere und hintere Ende um 180 ° verdreht sind, wird dieser räumlich falsch orientierte Langteil 2 an der Ausschleuseinrichtung ausgeschleust und über eine sich zwischen der Abfördereinrichtung 15 und der ersten Vereinzelungseinrichtung 11 erstreckende Schurre 155 in den Schöpfbereich 39 oder die Zuführschurre 25 der ersten Vereinzelungseinrichtung 11 befördert. Somit werden der der zweiten Abfördereinrichtung 15 in Förderrichtung - gemäß Pfeil 9 - nachgeordneten Pufferstrecke 16 nur vereinzelte, den Sortierkriterien entsprechende und in der Schwerpunktslage sowie räumlichen Lage richtig orientierte Langteile 2 zugeführt. Der einzelne Langteil 2 wird im Weiteren von einer, in dem der Abfördereinrichtung 15 abgewandten Endbereich der Pufferstrecke 16 angeordneten, ersten Handhabungseinrichtung 156 ergriffen und an eine zweite Handhabungseinrichtung 157 im Wesentlichen positionsgenau übergeben, worauf dieser wiederum auf die zweite Zufördereinrichtung 17 abgelegt und in eine Entnahmeposition an sein der zweiten Handhabungseinrichtung 157 gegenüberliegendes Ende befördert wird. Der Langteil 2 wird darauffolgend beispielsweise von einem, die Montage- und/oder Verarbeitungseinrichtung 3 aufweisenden Greifer an der Entnahmeposition ergriffen und beispielsweise einem Montageprozess zu Herstellung einer Baugruppe zugeführt.

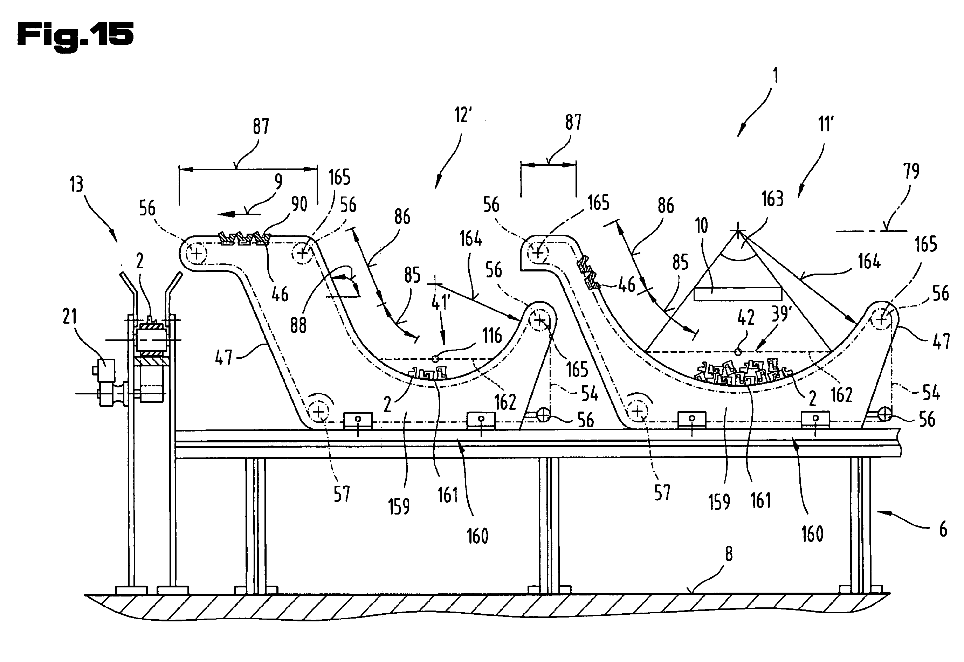

In der Fig. 15 ist ein Teilabschnitt einer anderen Ausführung der Vorrichtung 1 zum Fördern, Vereinzeln und Ausrichten von Langteilen 2 in Seitenansicht und stark vereinfacht gezeigt. Die Vorrichtung 1 umfasst eine schematisch dargestellte, erste Zufördereinrichtung 10, jeweils eine an diese in Förderrichtung - gemäß Pfeil 9 - anschließende erste und zweite Vereinzelungseinrichtung 11', 12', die der zweiten Vereinzelungseinrichtung 12' in Förderrichtung - gemäß Pfeil 9 - nachgeordnete, erste Abfördereinrichtung 13, die dieser nachgeordnete, in dieser Figur nicht ersichtliche Ausrichtvorrichtung 14, zweite Abfördereinrichtung 15, Pufferstrecke 16 und zweite Zufördereinrichtung 17 zu der Montage- und/oder Verarbeitungseinrichtung 3. Die zur ersten Vereinzelungseinrichtung 11' um 90 ° versetzt angeordnete, erste Zufördereinrichtung 10, insbesondere der Bandförderer 18, erstreckt sich bis zu dem Schöpfbereich 39' der ersten Vereinzelungseinrichtung 11' und liegt oberhalb dieses Schöpfbereiches 39'.

Die Ausführung dieser Vorrichtung 1 unterscheidet sich gegenüber den vorhergehenden Ausführungen nur in der Ausbildung und Anordnung der Vereinzelungseinrichtungen 11', 12'. Die beiden Vereinzelungseinrichtungen 11', 12' weisen jeweils einen, zwei quer zur Förderrichtung - gemäß Pfeil 9 - im Abstand voneinander angeordnete Seitenteile 159 aufweisenden Rahmen 160 auf und sind die Rahmen 160 mit dem, an einer Aufstandstandsfläche 8 abgestützten Grundrahmen 6 bevorzugt lösbar verbunden.

Die Vereinzelungseinrichtungen 11' und 12' zum Fördern und Vereinzeln von Langteilen 2 aus einer Teilmenge in einer zu deren Längserstreckung quer verlaufenden Förderrichtung - gemäß Pfeil 9 - sind in einer Reihe hintereinander angeordnet, wobei sich der Austragabschnitt 87 vom Transportorgan 47 der ersten Vereinzelungseinrichtung 11' bis über einen Schöpfbereich 41' der zweiten Vereinzelungseinrichtung 12' erstreckt.

Dabei werden die Langteile 2 an der Aufgabestelle auf den Bandförderer 18 als Schüttgut abgelegt und entlang diesem in Richtung zum Schöpfbereich 39' befördert und fallen im Schöpfbereich 39' auf das Transportorgan 47 der ersten Vereinzelungseinrichtung 11' hinab. Das Transportorgan 47 der beiden Vereinzelungseinrichtungen 11', 12' ist, wie bereits oben zu den Fig. 6, 8 und 9 ausführlich beschrieben, durch eine Vielzahl von in Förderrichtung - gemäß Pfeil 9 - der Langteile 2 hintereinander um einen Abstandsspalt 99 angeordnete Mitnahmeorgane 46 gebildet. Andererseits kann das Transportorgan 47 auch durch das endlose Transportband, wie in Fig. 14 dargestellt, gebildet sein. Das endlose Transportorgan 47 ist wiederum mit den beidseitig zu diesem angeordneten Antriebsorganen 54, wie vereinfacht in strichpunktierten Linien dargestellt, insbesondere Antriebsketten, bewegungsmäßig gekoppelt. Jedes der beiden Antriebsorgane 54 ist um das mit einem nicht weiters dargestellten Antrieb 55 gekuppelten Antriebsrad 57 und mehrere Umlenkräder 56 geführt. An den einander gegenüberliegenden Seitenteilen 159 sind jeweils zumindest ein Antriebsrad 57 und die voneinander beabstandeten, achsparallelen Umlenkräder 56 drehbar gelagert, wobei die beiden Antriebsräder 57 synchronisiert angetrieben sind, insbesondere über eine nicht dargestellte, gemeinsame Antriebswelle 58 gekoppelt sind.

Die beiden Seitenteilen 159 sind jeweils mit einem sich zwischen den beiden horizontal beabstandeten, dem Schöpfbereich 39' zugewandten Umlenkrädern 56 erstreckenden, nicht weiters dargestellten Plattensegment ausgestattet, das eine sich zumindest über eine Teillänge des Antriebsorganes 54 angeordnete Kulissenbahn, insbesondere in Form eines Schlitzes, zur Führung des jeweiligen Antriebsorganes 54 entlang derselben ausbildet.

Der Schöpfbereich 39', 41' ist jeweils durch den diesem zugewandten, ersten Strang des Transportorganes 47 gebildet und erstreckt sich über einen Teilabschnitt 161 bzw. Teillänge des ersten Stranges, wobei der Schöpfbereich 39', 41' bzw. Teilabschnitt einen zu der oberhalb des Schöpfbereiches 39', 41' liegenden Horizontalebene 79 zugewandt, einen konkaven Verlauf aufweist, insbesondere kreisbogenförmig ausgebildet ist. Somit weist der Schöpfbereich 39', 41' einen wannenartigen Querschnittsverlauf auf.

Der Schöpfbereich 39', 41' liegt unterhalb des Ausscheide- und Austragabschnittes 86, 87 und erstreckt sich bis in den Mitnahmeabschnitt 85 hinein. Der Schöpfbereich 39', 41' ist in der Querschnittsebene betrachtet, im Wesentlichen durch einen Kreisabschnitt gebildet bzw. durch einen Kreisabschnitt begrenzt, dessen Sehne 162 den Mitnahmeabschnitt 85 schneidet und im Wesentlichen parallel oder unter einem Winkel geneigt zu der oberhalb des Schöpfbereiches 39', 41' verlaufenden Horizontalebene 79 verläuft und ein Mittelpunktswinkel 163 zwischen 50 ° und 90 °, beispielsweise 60 °, beträgt. Ein Radius 164 des konkaven Teilabschnittes des Transportorganes 47 bzw. des Kreisabschnittes der ersten Vereinzelungseinrichtung 11' ist größer als der Radius des konkaven Teilabschnittes des Transportorganes 47 bzw. des Kreisabschnittes der zweiten Vereinzelungseinrichtung 12'. Der Radius 164 des konkaven Teilabschnittes des Transportorganes 47 der ersten Vereinzelungseinrichtung 11' beträgt etwa das 1,2-fache bis 1,5-fache, insbesondere das 1,4-fache, vom Radius 164 des konkaven Teilabschnittes des Transportorganes 47 der zweiten Vereinzelungseinrichtung 12'. Der Radius 164 des konkaven Teilabschnittes des Transportorganes 47 der zweiten Vereinzelungseinrichtung 12' beträgt etwa das 1,1-fache bis 1,4-fache, insbesondere das 1,2-fache, von der maximalen Länge 32 des Langteiles 2. Letzteres hat den Vorteil, dass einerseits ein Ausrichten der Langteile 2 im Schöpfbereich 41' in eine zur Längserstreckung der Mitnahmeorgane 46 im Wesentlichen parallele Lage begünstigt und andererseits ein Verkanten der Langteile 2 im Schöpfbereich 41' vermieden wird. Die Länge 32 der Langteile 2 beträgt etwa zwischen 60 mm und 350 mm, insbesondere 100 mm und 300 mm, beispielsweise 260 mm. Beidseitig zum endlosen Transportorgan 47 sind nicht dargestellte Seitenwände angeordnet, um den Schöpfbereich 39', 41' seitlich zu begrenzen.

Das angetriebene, umlaufende Transportorgan 47 nimmt mit seinen Mitnahmeorganen 46 in der Vertiefungsnut 90 einzelne Langteile 2 aus der Teilmenge von Langteilen 2 im Schöpfbereich 39', 41' auf und befördert diese vom in den Schöpfbereich 39', 41' hineinragenden Mitnahmeabschnitt 85 in Richtung des Austragabschnittes 87. Sind mehrere Langteile 2 ineinander verhakt, werden diese aufgrund der Verlagerung des gemeinsamen Schwerpunktes außerhalb der Vertiefungsnut 90 im Ausscheideabschnitt 86 ausgeschieden und dem Schöpfbereich 39', 41' wieder rückgeführt, wie bereits oben ausführlich beschrieben.

Der dem Schöpfbereich 41 benachbarte und sich zwischen diesem und dem Abgabebereich 51 erstreckende, insbesondere gezogene Strang des Transportorganes 47 ist in den dem Schöpfbereich 39', 41' zugewandt, in etwa konkav gekrümmten Mitnahmeabschnitt 85, den Ausscheideabschnitt 86 und Austragabschnitt 87 unterteilt. Der Austragabschnitt 87 verläuft über weite Teile im Wesentlichen geradlinig und parallel zur Horizontalebene 79, während der Ausscheideabschnitt 86, wie in den vorangegangenen Fig. erläutert, geneigt und geradlinig ausgebildet ist.

Um eine optimale Austragleistung an der zweiten Vereinzelungseinrichtung 12' zu erreichen, beträgt ein Verhältnis der Anzahl der Langteile 2 im Schöpfbereich 39', 41' zwischen der ersten und zweiten Vereinzelungseinrichtung 11', 12' etwa bis 10:1, insbesondere 5:1. Somit ist auch das Füllvolumen des ersten und zweiten Schöpfbereiches 39', 41' entsprechend dem Kreisabschnitt begrenzt. Der Füllstand in den Schöpfbereichen 39', 41' in der ersten und zweiten Vereinzelungseinrichtung 11', 12' wird jeweils über ein oder zwei, im Schöpfbereich 39', 41' angeordnete Überwachungsorgane 42, 116 in Form von Sensoren, wie oben beschrieben, überwacht. Der oder die Sensoren der Schöpfbereiche 39', 41' sind dabei auf Höhe der Sehne 162 angeordnet. Die Langteile 2 werden dem Schöpfbereich 39', 41' intermittierend von der ersten Zufördereinrichtung 10 einerseits und der ersten Vereinzelungseinrichtung 11' andererseits zugefördert. Sobald der Soll-Füllstand im Schöpfbereich 41' erreicht wird, wird die Zufuhr von Langteilen 2 aus der ersten Vereinzelungseinrichtung 11' unterbrochen, in dem man die erste Vereinzelungseinrichtung 11' stillsetzt. Ebenso wird die erste Zufördereinrichtung 10 stillgesetzt, sobald der Soll-Füllstand im Schöpfbereich 39' erreicht wird.

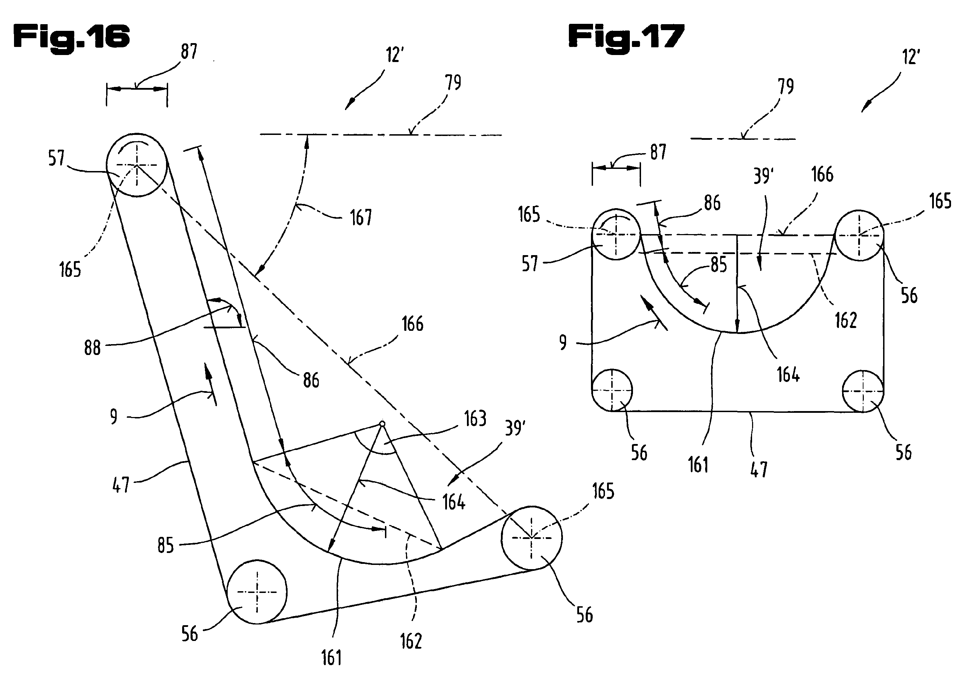

In den Fig. 16 und 17 sind weitere Ausbildungen des Transportorganes 47 der ersten und/oder zweiten Vereinzelungseinrichtung 11', 12' zum Fördern und Vereinzeln von Langteilen 2 aus einer Teilmenge in einer zu deren Längserstreckung quer verlaufenden Förderrichtung - gemäß Pfeil 9 - in Seitenansicht und stark vereinfacht dargestellt. Dieses Transportorgan 47 kann wiederum durch ein Transportband oder die gegeneinander versschwenkbaren, nicht dargestellten Mitnahmeorgane 46, die mit den beidseits zum Transportorgan 47 angeordneten, nicht dargestellten Antriebsorganen 54 bewegungsmäßig verbunden sind, gebildet werden.

Wie in Fig. 16 ersichtlich und auch auf Fig. 15 zu übertragen, schließt eine sich zwischen den vertikal übereinander und horizontal zueinander versetzt angeordneten, parallel verlaufenden Achsen 165 der dem Schöpfbereich 39', 41' benachbarten Umlenk- und Antriebsräder 56, 57 oder zwei Umlenkrädern 56 erstreckende, in strichpunktierten Linie dargestellte Verbindungsgerade 166 und die oberhalb des Schöpfbereiches 39'; 41' liegende Horizontalebene 79 einen Winkel 167 kleiner 90 °, insbesondere zwischen 30 ° und 60 °, beispielsweise 45 °, ein. Die Achsen 165 verlaufen senkrecht zu den Seitenteilen 159 bzw. zu einer Querschnittsebene der Vereinzelungseinrichtung 11', 12'. Die Seitenteile 159 sind parallel zueinander angeordnet und auf die Horizontalebene 79 senkrecht ausgerichtet.

Die Sehne 162 verläuft unter einem Winkel geneigt zu der oberhalb des Schöpfbereiches 39', 41' verlaufenden Horizontalebene 79 und beträgt ein Mittelpunktswinkel 163 zwischen 90 ° und 140°, beispielsweise 120 °. An den nicht dargestellten, im Abstand quer zur Förderrichtung - gemäß Pfeil 9 - einander gegenüberliegenden Seitenteilen 159 sind jeweils zumindest ein Antriebsrad 57 und die Umlenkräder 56 drehbar gelagert, wobei die beiden Antriebsräder 57 synchronisiert angetrieben sind, insbesondere über eine nicht dargestellte, gemeinsame Antriebswelle 58 gekoppelt sind.

Bei der Ausführung nach Fig. 17 verlaufen die Verbindungsgerade 166 und die Sehne 162 parallel zu der oberhalb des Schöpfbereiches 39'; 41' angeordneten Horizontalebene 79. Der Mittelpunktswinkel 163 beträgt 180 °. Der den Schöpfbereich 39', 41' begrenzende Kreisabschnitt ist gemäß dieser Ausführung halbkreisförmig.

Weiters wird aus Fig. 16 und 17 ersichtlich, dass die Sehne 162 den Einlaufbeginn des Ausscheideabschnittes 86 schneidet.

Die Geometrie des Transportorganes 47 gestaltet sich in Abhängigkeit der konstruktiven Ausbildung der Langteile 2 und können die Vereinzelungseinrichtungen 11, 11', 12, 12' individuell auf die Type von Langteil 2 abgestimmt werden, sodass an der zweiten Vereinzelungseinrichtung 12, 12' eine maximale Austragleistung erreicht wird.

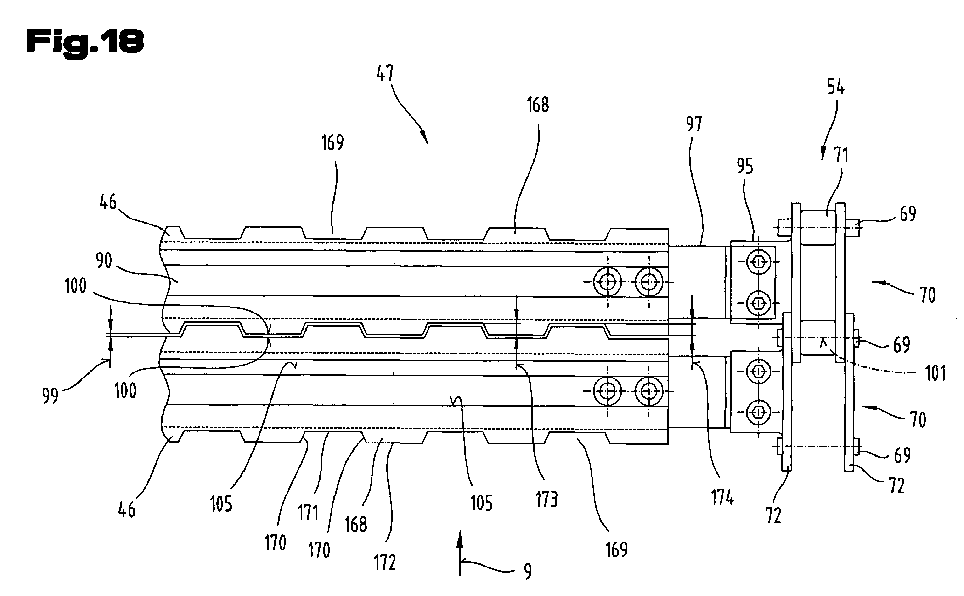

In der Fig. 18 ist ein Teilabschnitt des Transportorganes 47 in einer weiteren Ausführung gezeigt. Das Transportorgan 47 weist die, über zwei beidseitig zu diesem angeordnete Antriebsorgane 54, insbesondere Antriebsketten, gelenkig miteinander verbundenen Mitnahmeorgane 46 auf, wie bereits oben ausführlich beschrieben. Die einander zugewandten Längskanten 100 der in Förderrichtung - gemäß Pfeil 9 - unmittelbar aufeinander folgenden Mitnahmeorgane 46 sind jeweils als Profil, insbesondere Sägezahnprofil, ausgebildet und weisen in Längserstreckung der Mitnahmeorgane 46 abwechselnd hintereinander angeordnete, trapezartige Profilspitzen 168 und trapezartige Profilsenken 169 auf. Die Profilspitzen 168 des einen Mitnahmeorganes 46 tauchen in die Profilsenken 169 des anderen Mitnahmeorganes 46 ein, wobei zwischen diesen der Abstandsspalt 99 ausgebildet ist. Die Profilspitzen 168 und Profilsenken 169 sind komplementär ausgebildet und in Bezug auf die Gelenkachse 101 einander gegenüberliegend angeordnet. Der Abstandsspalt 99 ist von zwei einander gegenüberliegenden komplementär ausgebildeten Längskanten 100, insbesondere den jeweils in einer Reihe nebeneinander angeordneten Profilspitzen 168 und Profilsenken 169, der in Förderrichtung - gemäß Pfeil 9 - unmittelbar aufeinander folgenden Mitnahmeorgane 46 begrenzt und entspricht im Wesentlichen annähernd der minimalsten Querschnittsabmessung 34 des Langteiles 2 (wie in Fig. 1 eingetragen). Die Längskanten 100 sind dabei jeweils geringfügig versetzt zur Gelenkachse 101 zweier gelenkig miteinander verbundener Kettenglieder 70 angeordnet. Die Profilsenken 169 sind jeweils von geneigt zueinander verlaufenden Profilflanken 170 der Profilspitzen 168 und einer parallel zur Gelenkachse 101 verlaufenden, ebenen Profilgrundfläche 171 begrenzt, während die Profilspitzen 168 jeweils von den geneigten Profilflanken 170 und einer parallel zur Gelenkachse 101 verlaufenden, ebenen Profilkopffläche 172 begrenzt sind. Eine zwischen der Profilgrundfläche 171 und der Profilkopffläche 172 bemessene, minimale Höhe 173 der Profilspitzen 168 und eine zwischen der Profilkopffläche 172 und der Profilgrundfläche 171 bemessene, minimale Tiefe 174 der Profilsenken 169, sind zumindest geringfügig größer als der durch die Profilspitzen 168 und Profilsenken 169 begrenzte Abstandsspalt 99.

Abschließend sei noch erwähnt, dass jede beliebige Kombination der Vereinzelungseinrichtung 11, 11', 12, 12' untereinander möglich ist, ebenso kann die Ausrichtung deren zueinander individuell gestaltet werden. Auch hat es sich als günstig erwiesen, wenn die Transportgeschwindigkeit der Langteile 2 entlang der Vorrichtung 1 beginnend von der ersten Zufördereinrichtung 10, ersten und zweiten Vereinzelungseinrichtung 11, 11', 12, 12', ersten Abfördereinrichtung 13, Ausrichtvorrichtung 14, zweite Abfördereinrichtung 15, Pufferstrecke 16 bis hin zur zweiten Zufördereinrichtung 17 jeweils um den Faktor zwischen 1,05 und 1, 1 erhöht wird.

Der Ordnung halber sei abschließend darauf hingewiesen, dass zum besseren Verständnis des Aufbaus der Vorrichtung 1 und Vereinzelungseinrichtung 11, 11', 12, 12 deren Bestandteile teilweise unmaßstäblich und/oder vergrößert und/oder verkleinert dargestellt wurden.

### Bezugszeichenaufstellung

- 1: Vorrichtung
- 2: Langteil
- 3: Montage- und/oder Verarbeitungseinrichtung
- 4: Profil
- 5: Profil

- 6: Grundrahmen
- 7: Stützfuß
- 8: Aufstandsfläche
- 9: Pfeil
- 10: Zufördereinrichtung

- 11: Vereinzelungseinrichtung
- 11': Vereinzelungseinrichtung
- 12: Vereinzelungseinrichtung
- 12': Vereinzelungseinrichtung
- 13: Abfördereinrichtung
- 14: Ausrichtvorrichtung
- 15: Abfördereinrichtung

- 16: Pufferstrecke
- 17: Zufördereinrichtung
- 18: Bandförderer
- 19: Gurtförderer
- 20: Traggestell

- 21: Antrieb
- 22:
- 23:
- 24: Vorratsbehälter
- 25: Zuführschurre

- 26: Rahmen
- 27: Umlenkrolle
- 28: Antrieb
- 29: Antriebsrolle
- 30: Transportband

- 31: Mitnahmeorgan
- 32: Länge
- 33: Breite
- 34: Querschnittsabmessung
- 35:

- 36:
- 37: Schurrenboden
- 38: Schurrenseitenwand

- 39: Schöpfbereich
- 39': Schöpfbereich
- 40: Abgabebereich
- 41: Schöpfbereich
- 41': Schöpfbereich
- 42: Überwachungsorgan
- 43: Ablenkplatte
- 44: Vorratsbehälter
- 45: Zuführschurre

- 46: Mitnahmeorgan
- 47: Transportorgan
- 48: Rahmen
- 49: Schurrenboden
- 50: Schurrenseitenwand

- 51: Abgabebereich
- 52: Seitenteil
- 53: Querträger
- 54: Antriebsorgan
- 55: Antrieb

- 56: Umlenkrad
- 57: Antriebsrad
- 58: Antriebswelle
- 59: Antriebsrad
- 60: Umlenkrad

- 61: Zugmittel
- 62: Schutzgehäuse
- 63: Vertikalabstand
- 64: Strang
- 65: Kulissenbahn

- 66: Führungsflächen
- 67: Plattensegment
- 68: Plattensegment
- 69: Bolzen
- 70: Kettenglied

- 71: Rolle
- 72: Lasche
- 73: Breite
- 74: Stirnseite
- 75: Eingriffsfläche

- 76: Stirnseite
- 77: Plattensegment
- 78: Führungsfläche
- 79: Horizontalebene
- 80: Strang

- 81: Führungsfläche
- 82: Stützplatte
- 83: Spanneinheit
- 84: Pfeil
- 85: Mitnahmeabschnitt

- 86: Ausscheideabschnitt
- 87: Austrageabschnitt
- 88: Neigungswinkel
- 89: Winkel
- 90: Vertiefungsnut

- 91: Fallschacht
- 92: Ablenkplatte
- 93: Seitenwand
- 94: Linearführung
- 95: Befestigungslasche

- 96: Längsmittelebene
- 97: Anschlussplatte
- 98: Trägerplatte
- 99: Abstandsspalt
- 100: Längskante

- 101: Gelenkachse
- 102: Länge
- 103: Montagefläche
- 104: Nutboden
- 105: Führungsfläche

- 106: Winkel
- 107: Basis
- 108: Schenkel
- 109: Schmalseite
- 110: Abweiserfläche

- 111: Tiefe
- 112: Normalabstand
- 113: Flächenschwerpunkt
- 114: Breite
- 115: Eingriffsfläche

- 116: Überwachungsorgan
- 117: Überwachungsorgan
- 118:
- 119:
- 120:

- 151:
- 152:
- 153: Kamerasystem
- 154: Schlechtteilbehälter
- 155: Schurre

- 156: Handhabungseinrichtung
- 157: Handhabungseinrichtung
- 158:
- 159: Seitenteil
- 160: Rahmen

- 161: Teilabschnitt
- 162: Sehne
- 163: Mittelpunktswinkel
- 164: Radius
- 165: Achse

- 166: Verbindungsgerade
- 167: Winkel
- 168: Profilspitze
- 169: Profilsenke
- 170: Profilflanke

- 171: Profilgrundfläche
- 172: Profilkopffläche
- 173: Höhe
- 174: Tiefe

## Patentansprüche

1. Vereinzelungseinrichtung (11'; 12; 12') zum Fördern und Vereinzeln von Langteilen (2) aus einer Teilmenge in einer zu deren Längserstreckung quer verlaufenden Förderrichtung (9), mit einem Schöpfbereich (39'; 41; 41') für eine Teilmenge von Langteilen (2) und einem oberhalb von diesem angeordneten Abgabebereich (51) für aus der Teilmenge vereinzelte Langteile (2), wobei sich zwischen dem Schöpfbereich (39'; 41; 41') und dem Abgabebereich (51) zumindest ein endlos umlaufendes, antreibbares Transportorgan (47) erstreckt, wobei das Transportorgan (47) in Förderrichtung (9) hintereinander angeordnete und quer zur Förderrichtung (9) parallel zueinander verlaufende Mitnahmeorgane (46) aufweist, **dadurch gekennzeichnet, dass** jedes Mitnahmeorgan (46) an seiner dem Schöpfbereich (39'; 41; 41') zugekehrten Außenseite wenigstens eine in dessen Längsrichtung erstreckende und in Richtung zum Schöpfbereich (39'; 41; 41') geöffnete Vertiefungsnut (90) mit etwa trapezartigem Querschnitt zur bedarfsweisen Aufnahme von Langteilen (2) aufweist, wobei eine Länge der Vertiefungnut (90) zumindest dem Doppelten der maximalen Länge (32) des Langteiles (2) entspricht und dass die Vertiefungsnut (90) durch einen Nutboden (104) und geneigt aufeinander zulaufende Führungsflächen (105) begrenzt ist und die Ebenen der beiden Führungsflächen (105) einen Winkel (106) von kleiner 90° einschließen.

2. Vereinzelungseinrichtung nach Anspruch 1, **dadurch gekennzeichnet, dass** das Transportorgan (47) durch ein um wenigstens ein Antriebsrad (57) und wenigstens ein Umlenkrad (56) geführtes Transportband gebildet ist und die Mitnahmeorgane (46) vom Transportband ausgebildet, insbesondere einstückig mit diesem verbunden sind.

3. Vereinzelungseinrichtung nach Anspruch 1, **dadurch gekennzeichnet, dass** das Transportorgan (47) durch eine Vielzahl von getrennt voneinander und gegeneinander verstellbaren Mitnahmeorganen (46) gebildet ist und dass beidseitig zum Transportorgan (47) quer zur Förderrichtung (9) der Langteile (2) im Abstand voneinander angeordnete, endlos umlaufende Antriebsorgane (54) angeordnet sind und dass sich zwischen den einander gegenüberliegenden Antriebsorganen (54) parallel zueinander und in Förderrichtung (9) der Langteile (2) um einen Abstandsspalt (99) getrennt voneinander angeordnete Mitnahmeorgane (46) erstrecken und jedes Mitnahmeorgan (46) mit den Antriebsorganen (54) bewegungsfest verbunden ist.

4. Vereinzelungseinrichtung nach Anspruch 3, **dadurch gekennzeichnet, dass** die Antriebsorgane (54) durch endlos umlaufende Antriebsketten gebildet sind, die jeweils über parallel zueinander verlaufende Bolzen (69) gelenkig miteinander verbundene Kettenglieder (70) aufweist und um wenigstens ein Antriebsrad (54) und wenigstens ein Umlenkrad (56) geführt sind und dass sich jeweils zwischen zwei in Bezug auf eine Längsmittelebene (96) symmetrisch einander gegenüberliegenden Kettengliedern (70) der Antriebsketten die Mitnahmeorgane (46) parallel zueinander und in Förderrichtung (9) der Langteile (9) um den Abstandsspalt (99) getrennt voneinander angeordnet erstrecken und jedes Mitnahmeorgan (46) mit den einander gegenüberliegenden Kettengliedern (70) der Antriebsketten bewegungsfest verbunden sind und dass Längskanten (100) von zwei in Förderrichtung (9) hintereinander angeordneten Mitnahmeorganen (46) bezüglich einer zwischen zwei Kettengliedern (70) angeordneten Gelenkachse (101) einander gegenüberliegen sowie geringfügig versetzt zur Gelenkachse (101) verlaufen, wobei die Längskanten (100) den Abstandsspalt (99) begrenzen, der annähernd der minimalen Querschnittsabmessung (34) des Langteiles (2) entspricht oder kleiner ist, als eine minimale Querschnittsabmessung (34) des Langteiles (2).

5. Vereinzelungseinrichtung nach Anspruch 4, **dadurch gekennzeichnet, dass** die Längskanten (100) von zwei aufeinander folgenden Mitnahmeorganen (46) des Tranportorganes (47) jeweils durch ein Profil mit in Längserstreckung der Mitnahmeorgane (46) abwechselnd hintereinander angeordneten Profilspitzen (168) und gegenüber diese vertiefte Profilsenken (169) gebildet sind und dass die Profilspitzen (168) des ersten Mitnahmeorganes (46) in die Profilsenken (169) des anderen Mitnahmeorganes (46) vorragen und den Abstandsspalt (99) begrenzen.

6. Vereinzelungseinrichtung nach Anspruch 1, **dadurch gekennzeichnet, dass** ein sich zwischen dem Schöpfbereich (39'; 41; 41') und dem Abgabebereich (51) erstreckender, dem Schöpfbereich (39'; 41; 41') zugewandter Strang des Transportorganes (47) in einen Mitnahmeabschnitt (85), Ausscheideabschnitt (86) und Austragabschnitt (87) unterteilt ist und dass der Mitnahmeabschnitt (85) dem Schöpfbereich (39'; 41; 41') zugewandt konkav gekrümmt, der Ausscheideabschnitt (86) über weite Teile im wesentlichen geradlinig und gegenüber einer Horizontalebene (79) geneigt, und der Austragabschnitt (87) über weite Teile im wesentlichen geradlinig und parallel zur Horizontalebene (79) verläuft.

7. Vereinzelungseinrichtung nach Anspruch 1, **dadurch gekennzeichnet, dass** ein sich zwischen dem Schöpfbereich (39'; 41; 41') und dem Abgabebereich (51) erstreckender, dem Schöpfbereich (39'; 41; 41') zugewandter Strang des Transportorganes (47) in einen Mitnahmeabschnitt (85), Ausscheideabschnitt (86) und Austragabschnitt (87) unterteilt ist und dass der Mitnahmeabschnitt (85) in Verlängerung zum Ausscheideabschnitt (86) und über weite Teile im wesentlichen geradlinig und der Austragabschnitt (87) über weite Teile im wesentlichen geradlinig und parallel zur Horizontalebene (79) verläuft.

8. Vereinzelungseinrichtung nach Anspruch 6 oder 7, **dadurch gekennzeichnet, dass** ein Neigungswinkel (88) des Ausscheideabschnittes (86) in Bezug auf die Horizontalebene (79) kleiner 90° beträgt.

9. Vereinzelungseinrichtung nach Anspruch 8, **dadurch gekennzeichnet, dass** der Neigungswinkel (88) des Ausscheideabschnittes (86) in Bezug auf die Horizontalebene (79) zwischen 60° und 85° beträgt.

10. Vereinzelungseinrichtung nach Anspruch 6 oder 7, **dadurch gekennzeichnet, dass** eine zwischen einer im Scheitelpunkt (S) des konkaven Mitnahmeabschnittes (85) angelegten Tangente (T) und einem Schurrenboden (49) einer Zuführschurre (45) oder dem geradlinigen Mitnahmeabschnitt (85) und einem Schurrenboden (49) einer Zuführschurre (45) eingeschlossener Winkel (89) kleiner 90° beträgt.

11. Vereinzelungseinrichtung nach Anspruch 10, **dadurch gekennzeichnet, dass** der Winkel (89) zwischen 55° und 80° beträgt.

12. Vereinzelungseinrichtung nach Anspruch 1, **dadurch gekennzeichnet, dass** der Schöpfbereich (41) von einer an einem Rahmen (48) der Vereinzelungseinrichtung (12) angeordneten Zuführschurre (45) eines Vorratsbehälters (44) ausgebildet und durch Teilbereiche der Zuführschurre (45) und dem diesen zugewandten Strang vom Transportorgan (47), insbesondere dessen Mitnahmeabschnitt (85), begrenzt ist.

13. Vereinzelungseinrichtung nach Anspruch 1, **dadurch gekennzeichnet, dass** der Schöpfbereich (39'; 41; 41') durch einen diesem zugewandten, konkaven Teilabschnitt (161) eines Stranges vom Transportorgan (47) gebildet ist und einen wannenförmigen Querschnittsverlauf aufweist.

14. Vereinzelungseinrichtung nach Anspruch 13, **dadurch gekennzeichnet, dass** der Schöpfbereich (39'; 41; 41') in der Querschnittsebene betrachtet, im Wesentlichen durch einen Kreisabschnitt begrenzt ist, dessen Sehne (162) den Mitnahmeabschnitt (85), insbesondere in Förderrichtung (9) nahe vor dem Einlaufbeginn des Ausscheideabschnittes (86), oder den Einlaufbeginn des Ausscheideabschnittes (86) schneidet und im Wesentlichen parallel oder winkelig geneigt zur Horizontalebene (79) verläuft und dass ein Mittelpunktswinkel (163) zwischen 50 ° und 90 ° beträgt.

15. Vereinzelungseinrichtung nach einem der Ansprüche 1 bis 14, **dadurch gekennzeichnet, dass** an zwei im Abstand quer zur Förderrichtung (9) einander gegenüberliegenden, senkrechten Seitenteilen (159) eines Rahmens (160) der Vereinzelungseinrichtung (11'; 12') jeweils zumindest ein Antriebsrad (57) und mehrere Umlenkräder (56) drehbar gelagert sind, wobei sich zwischen den vertikal übereinander und horizontal zueinander versetzt angeordneten, parallel verlaufenden Achsen (165) der dem Schöpfbereich (39', 41') benachbarten Umlenk- und/oder Antriebsräder (56, 57) erstreckende Verbindungsgerade (166) und die Horizontalebene (79) einen Winkel (167) kleiner 90 °, insbesondere zwischen 30 ° und 60 °, beispielsweise 45 °, einschließen.

16. Vereinzelungseinrichtung nach einem der Ansprüche 1 bis 14, **dadurch gekennzeichnet, dass** an zwei im Abstand quer zur Förderrichtung (9) einander gegenüberliegenden, senkrechten Seitenteilen (159) eines Rahmens (160) der Vereinzelungseinrichtung (11'; 12') jeweils zumindest ein Antriebsrad (57) und mehrere Umlenkräder (56) drehbar gelagert sind, wobei sich zwischen den vertikal übereinander und horizontal zueinander versetzt angeordneten, parallel verlaufenden Achsen (165) der dem Schöpfbereich (39', 41') benachbarten Umlenk- und/oder Antriebsräder (56, 57) erstreckende Verbindungsgerade (166) und die Horizontalebene (79) parallel zueinander verlaufen.

17. Vereinzelungseinrichtung nach einem der Ansprüche 1 bis 16, **dadurch gekennzeichnet, dass** das Transportorgan (47) oder jedes Antriebsorgan (54) entlang einer an einem jeden Seitenteil (52; 159) des Rahmens (48; 160) angeordneten, sich zumindest zwischen dem Schöpfbereich (39'; 41; 41') und dem Abgabebereich (51) des Transportorganes (47) erstreckenden Kulissenbahn (65) geführt ist.

18. Vereinzelungseinrichtung nach einem der Ansprüche 1 bis 5, **dadurch gekennzeichnet, dass** jedes Mitnahmeorgan (46) einen etwa C-Profilquerschnitt und eine vom Schöpfbereich (39'; 41; 41') abgewandte Basis (107) und zwei an der Basis (107) abkragende Schenkel (108) aufweist.

19. Vereinzelungseinrichtung nach Anspruch 18, **dadurch gekennzeichnet, dass** ein freies Ende des in Förderrichtung (9) der Langteile (2) vorderen, ersten Schenkels (108) an einem freien Ende des in Förderrichtung (9) der Langteile (2) hinteren, zweiten Schenkels (108) vorragt.

20. Vereinzelungseinrichtung nach Anspruch 18 oder 19, **dadurch gekennzeichnet, dass** ein freies Ende des in Förderrichtung (9) der Langteile (2) vorderen, ersten Schenkels (108) geneigt zum Nutboden (104) und eine Abweiserfläche (110) ausbildet und der Nutboden (104) und die Abweiserfläche (110) einen Winkel einschließen.

21. Vereinzelungseinrichtung nach einem der Ansprüche 18 bis 20, **dadurch gekennzeichnet, dass** die Basis (107) den Nutboden (104) und der erste und zweite Schenkel (108) die einander zugewandten Führungsflächen (105) ausbilden.

22. Vereinzelungseinrichtung nach einem der Ansprüche 18 bis 21, **dadurch gekennzeichnet, dass** eine minimale Tiefe (111) der Vertiefungsnut (90) zumindest geringfügig größer ausgebildet ist als ein zwischen einem in der Querschnittsebene liegenden Flächenschwerpunkt (113) des einzelnen Langteiles (2) und dem Nutboden (104) gemessener Normalabstand (112).

23. Vereinzelungseinrichtung nach einem der Ansprüche 18 bis 21, **dadurch gekennzeichnet, dass** eine Breite (114) der Vertiefungsnut (90) annähernd der maximalen Querschnittsabmessung (34) des einzelnen Langteiles (2) entspricht.

24. Vereinzelungseinrichtung nach Anspruch 1, **dadurch gekennzeichnet, dass** der Winkel (106) zwischen 20° und 30° beträgt.

## Claims

1. Separating device (11'; 12; 12') for conveying and separating elongate parts (2) from a part quantity in a conveying direction (9) extending transversely to their longitudinal extension, with a pick-up region (39'; 41; 41') for a part quantity of elongate parts (2) and a discharge region (51) for elongate parts (2) separated from the part quantity disposed above it, with at least one endlessly circulating, driveable conveyor element (47) extending between the pick-up region (39'; 41; 41') and the discharge region (51), which conveyor element (47) has driver elements (46) disposed one after the other in the conveying direction (9) and extending parallel with one another transversely to the conveying direction (9), **characterized in that** each driver element (46) has at least one recessed groove (90) on its external face directed towards the pick-up region (39'; 41; 41') extending in its longitudinal direction and open in the direction towards the pick-up region (39'; 41; 41') with an approximately trapezoidal cross-section for accommodating elongate parts (2) as and when necessary, and a length of the recessed groove (90) corresponds to at least twice the maximum length (32) of the elongate part (2) and the recessed groove (90) is bounded by a groove base (104) and guide surfaces (105) extending at an angle towards one another, and the planes of the two guide surfaces (105) subtend an angle (106) of less than 90°.

2. Separating device as claimed in claim 1, **characterised in that** the conveyor element (47) is provided in the form of a conveyor belt guided round at least one drive wheel (57) and at least one pulley block (56), and the driver elements (46) are formed by conveyor belts, in particular are integrally joined thereto.

3. Separating device as claimed in claim 1, **characterised in that** the conveyor element (47) is formed by a plurality of mutually separate driver elements (46) which can be displaced relative to one another, and endlessly circulating drive elements (54) are disposed on either side of the conveyor element (47) spaced at a distance apart from one another transversely to the conveying direction (9) of the elongate parts (2), and driver elements (46) extend between the oppositely lying drive elements (54) parallel with one another and separated from one another in the conveying direction (9) of the elongate parts (2) by a spacing gap (99), and every driver element (46) is connected to the drive elements (54) so as to be fixed therewith in displacement.

4. Separating device as claimed in claim 3, **characterised in that** the drive elements (54) are formed by endlessly circulating drive chains, comprising chain links (70) articulatingly connected to one another by bolts (69) extending parallel with one another and guided round at least one drive wheel (54) and at least one pulley block (56), and the driver elements (46) extend respectively between two chain links (70) of the drive chains lying symmetrically opposite one another by reference to a longitudinal mid-plane (96) parallel with one another and separated from one another in the conveying direction (9) of the elongate parts (2) by the spacing gap (99), and every driver element (46) is connected to the oppositely lying chain links (70) of the drive chains so as to be fixed in displacement therewith, and longitudinal edges (100) of two driver elements (46) disposed one after the other in the conveying direction (9) extend opposite from one another by reference to an articulation axis (101) between two chain links (70) as well as slightly offset from the articulation axis (101), which longitudinal edges (100) bound the spacing gap (99) which more or less corresponds to the minimum cross-sectional dimension (34) of the elongate part (2) or is smaller than a minimum cross-sectional dimension (34) of the elongate part (2).

5. Separating device as claimed in claim 4, **characterised in that** the longitudinal edges (100) of two driver elements (46) of the conveyor element (47) disposed one after the other are respectively formed by a section with section peaks (168) disposed one after the other in the longitudinal extension of the driver elements (46) alternating with section valleys (169) recessed with respect thereto, and the section peaks (168) of the first driver element (46) project into the section valleys (169) of the other driver element (46) and bound the spacing gap (99).

6. Separating device as claimed in claim 1, **characterised in that** a strand of the conveyor element (47) extending between the pick-up region (39'; 41; 41') and the discharge region (51) and directed towards the pick-up region (39'; 41; 41') is divided into a driving portion (85), a separating region (86) and a discharge portion (87) and the driving portion (85) directed towards the pick-up region (39'; 41; 41') is concavely curved, the separating region (86) runs across wide parts in an essentially straight line and is inclined with respect to a horizontal plane (79) and the discharge portion (87) runs across wide parts in an essentially straight line and is parallel with the horizontal plane (79).

7. Separating device as claimed in claim 1, **characterised in that** a strand of the conveyor element (47) extending between the pick-up region (39'; 41; 41') and the discharge region (51) and directed towards the pick-up region (39'; 41; 41') is divided into a driving portion (85), a separating region (86) and a discharge portion (87) and the driving portion (85) runs in the extension of the separating region (86) and across wide parts in an essentially straight line, and the discharge portion (87) runs across wide parts in an essentially straight line and is parallel with the horizontal plane (79).

8. Separating device as claimed in claim 6 or 7, **characterised in that** an angle of inclination (88) of the separating region (86) by reference to the horizontal plane (79) is less than 90°.

9. Separating device as claimed in claim 8, **characterised in that** the angle of inclination (88) of the separating region (86) by reference to the horizontal plane (79) is between 60° and 85°.

10. Separating device as claimed in claim 6 or 7, **characterised in that** an angle (89) subtended between a tangent (T) at the apex point (S) of the concave driving portion (85) and a chute base (49) of an inlet chute (45) or the straight driving portion (85) and a chute base (49) of an inlet chute (45) is less than 90°.

11. Separating device as claimed in claim 10, **characterised in that** the angle (89) is between 55° and 80°.

12. Separating device as claimed in claim 1, **characterised in that** the pick-up region (41) is formed by an inlet chute (45) of a supply container (44) disposed on a frame (48) of the separating device (12) and bounded by part-regions of the inlet chute (45) and the strand of the conveyor element (47) directed towards it, in particular its driving portion (85).

13. Separating device as claimed in claim 1, **characterised in that** the pick-up region (39'; 41; 41') is formed by a concave part-portion (161) of a strand of the conveyor element (47) directed towards it and has a tub-shaped cross-sectional contour.

14. Separating device as claimed in claim 13, **characterised in that,** as viewed in the cross-sectional plane, the pick-up region (39'; 41; 41') is essentially formed or bounded by a circle segment, the chord (162) of which intersects the driving portion (85), in particular in the conveying direction (9) shortly before the inlet start of the separating region (86), or intersects the inlet start of the separating region (86) and extends essentially parallel with or inclined at an angle with respect to the horizontal plane (79), and a centre point angle (163) is between 50 ° and 90 °.

15. Separating device as claimed in one of claims 1 to 14, **characterised in that** at least one drive wheel (57) and several pulley blocks (56) are respectively rotatably mounted at two oppositely lying vertical side parts (159) of a frame (160) of the separating device (11'; 12') disposed at a distance apart transversely to the conveying direction (9), and an angle (167) subtended by the parallel axes (165) of the pulley blocks and/or the drive wheels (56, 57) extending adjacent to the pick-up region (39', 41'), disposed vertically one above the other and horizontally offset from one another, is less than 90 °, in particular between 30 ° and 60 °, for example 45 °.

16. Separating device as claimed in one of claims 1 to 14, **characterised in that** at least one drive wheel (57) and several pulley blocks (56) are respectively rotatably mounted at two oppositely lying vertical side parts (159) of a frame (160) of the separating device (11'; 12') disposed at a distance apart transversely to the conveying direction (9), and a connecting line (166) extending between the parallel axes (165) of the pulley blocks and/or drive wheels (56, 57) adjacent to the pick-up region (39' 41'), disposed vertically one above the other and horizontally offset from one another, and the horizontal plane (79) extend parallel with one another.

17. Separating device as claimed in one of claims 1 to 16, **characterised in that** the conveyor element (47) or every drive element (54) is guided along a slide track (65) extending along each side part (52; 159) of the frame (48; 160) between at least the pick-up region (39'; 41; 41') and the discharge region (51) of the conveyor element (47).

18. Separating device as claimed in one of claims 1 to 5, **characterised in that** every driver element (46) has an approximately C-shaped cross-section and a base (107) remote from the pick-up region (39'; 41; 41') and two legs (108) extending out from the base (107).

19. Separating device as claimed in claim 18, **characterised in that** a free end of the front first leg (108) projects in the conveying direction (9) of the elongate parts (2) alongside a free end of the rear second leg (108) in the conveying direction (9) of the elongate parts (2).

20. Separating device as claimed in claim 18 or 19, **characterised in that** a free end of the front first leg (108) in the conveying direction (9) of the elongate parts (2) is inclined with respect to the groove base (104) and forms a deflector surface (110), and the groove base (104) and the deflector surface (110) subtend an angle.

21. Separating device as claimed in claims 18 to 20, **characterised in that** the base (107) forms the groove base (104) and the first and second legs (108) form the mutually facing guide surfaces (105).

22. Separating device as claimed in one of claims 18 to 21, **characterized in that** a minimum depth (111) of the recessed groove (90) is at least slightly bigger than a normal distance (112) measured between a surface centre of gravity (113) of the individual elongate part (2) lying in the cross-sectional plane and the groove base (104).

23. Separating device as claimed in one of claims 18 to 21, **characterised in that** a width (114) of the recessed groove (90) approximately corresponds to the maximum cross-sectional dimension (34) of the individual elongate part (2).

24. Separating device as claimed in claim 1, **characterised in that** the angle (106) is between 20° and 30°.

## Revendications

1. Dispositif de séparation (11'; 12; 12') pour transporter et isoler des pièces allongées (2) hors d'un sous-ensemble dans une direction de transport (9) orientée transversalement, comportant une zone de collecte (39'; 41; 41') pour un sous-ensemble de pièces allongées (2) et, au-dessus de celle-ci, une zone d'évacuation (51) de pièces allongées (2) isolées hors du sous-ensemble, sachant qu'au moins un organe de transport (47) actionnable, défile en continu entre la zone de collecte (39'; 41; 41') et la zone d'évacuation (51), l'organe de transport (47) comportant des entraîneurs (46), qui sont disposés les uns derrière les autres dans la direction de transport (9) et sont parallèles entre eux transversalement à la direction de transport (9), **caractérisé en ce que** chaque entraîneur (46), sur sa face extérieure orientée vers la zone de collecte (39'; 41; 41'), comporte au moins une gorge (90) orientée dans le sens longitudinal, qui est ouverte vers la zone de collecte (39'; 41; 41') et qui a une section sensiblement trapézoïdale destinée à recevoir, en cas de besoin, des pièces allongées (2), sachant qu'une longueur de la gorge (90) correspond au moins au double de la longueur (32) maximale de la pièce allongée (2), et **en ce que** la gorge (90) est délimitée par un fond (104) et des surfaces de guidage (105) inclinées en convergeant l'une vers l'autre, et les plans des deux surfaces de guidage (105) délimitent entre eux un angle (106) inférieur à 90°.

2. Dispositif de séparation selon la revendication 1, **caractérisé en ce que** l'organe de transport (47) est formé par une bande transporteuse guidée autour d'au moins une roue d'entraînement (57) et d'au moins une roue de renvoi (56), et les entraîneurs (46) sont formés par la bande transporteuse, en particulier sont reliés d'un seul tenant à celle-ci.

3. Dispositif de séparation selon la revendication 1, **caractérisé en ce que** l'organe de transport (47) est formé par une pluralité d'entraîneurs (46) réglables séparément les uns des autres et les uns par rapport aux autres, et **en ce que**, de part et d'autre de l'organe de transport (47), sont montés des organes d'entraînement (54) sans fin, disposés à distance les uns des autres transversalement à la direction de transport (9) des pièces allongées (2), et **en ce qu'**entre les organes d'entraînement (54), situés face à face, s'étendent des entraîneurs (46) parallèles entre eux et écartés les uns des autres par une fente d'écartement (99) dans la direction de transport (9) des pièces allongées (2), et chaque entraîneur (46) est relié de manière solidaire en mouvement avec les organes d'entraînement (54).

4. Dispositif de séparation selon la revendication 3, **caractérisé en ce que** les organes d'entraînement (54) sont formés par des chaînes d'entraînement sans fin, qui comportent chacune des maillons (70), reliés entre eux de manière articulée par l'intermédiaire de boulons (69) disposés parallèlement entre eux, et sont guidées autour d'au moins une roue d'entraînement (54) et d'au moins une roue de renvoi (56), et **en ce que**, respectivement entre deux maillons (70) des chaînes d'entraînement, situés face à face symétriquement par rapport à un plan médian longitudinal (96), s'étendent les entraîneurs (46), disposés parallèlement entre eux et écartés les uns des autres par une fente d'écartement (99) dans la direction de transport (9) des pièces allongées (2), et chaque entraîneur (46) est relié de manière solidaire en mouvement avec les maillons (70), situés face à face, des chaînes d'entraînement, et **en ce que** les bords longitudinaux (100) de deux entraîneurs (46), agencés l'un derrière l'autre dans la direction de transport (9), sont disposés les uns en face des autres par rapport à un axe d'articulation (101) disposé entre deux maillons (70) et sont légèrement décalés par rapport à l'axe d'articulation (101), les bords longitudinaux (100) délimitant la fente d'écartement (99), qui correspond à peu près à la dimension minimale (34) de la section de la pièce allongée (2) ou est inférieure à une dimension minimale (34) de la section de la pièce allongée (2).

5. Dispositif de séparation selon la revendication 4, **caractérisé en ce que** les bords longitudinaux (100) de deux entraîneurs (46) successifs de l'organe de transport (47) sont formés respectivement par un profilé muni de pics (168) et de dépressions (169) en creux par rapport à ces derniers, lesquels sont disposés en alternance les uns derrière les autres dans le sens longitudinal des entraîneurs (46), et **en ce que** les pics (168) du premier entraîneur (46) s'avancent en saillie dans les dépressions (169) de l'autre entraîneur (46) et délimitent la fente d'écartement (99).

6. Dispositif de séparation selon la revendication 1, **caractérisé en ce qu'**un tronçon de l'organe de transport (47), s'étendant entre la zone de collecte (39'; 41; 41') et la zone d'évacuation (51) et orienté vers la zone de collecte (39'; 41; 41'), est subdivisé en une partie d'entraînement (85), une partie de séparation (86) et une partie d'évacuation (87), et **en ce que** la partie d'entraînement (85) a une courbure concave orientée vers la zone de collecte (39'; 41; 41'), la partie de séparation (86) est sensiblement droite sur de grandes parties et inclinée par rapport à un plan horizontal (79), et la partie d'évacuation (87) est sensiblement droite sur de grandes parties et est orientée parallèlement au plan horizontal (79).

7. Dispositif de séparation selon la revendication 1, **caractérisé en ce qu'**un tronçon de l'organe de transport (47), s'étendant entre la zone de collecte (39'; 41; 41') et la zone d'évacuation (51) et orienté vers la zone de collecte (39'; 41; 41'), est subdivisé en une partie d'entraînement (85), une partie de séparation (86) et une partie d'évacuation (87), et **en ce que** la partie d'entraînement (85) est située dans le prolongement de la partie de séparation (86) et est sensiblement droite sur de grandes parties et la partie d'évacuation (87) est sensiblement droite sur de grandes parties et est orientée parallèlement au plan horizontal (79).

8. Dispositif de séparation selon la revendication 6 ou 7, **caractérisé en ce qu'**un angle d'inclinaison (88), délimité entre la partie de séparation (86) et le plan horizontal (79), est inférieur à 90°.

9. Dispositif de séparation selon la revendication 8, **caractérisé en ce que** l'angle d'inclinaison (88), délimité entre la partie de séparation (86) et le plan horizontal (79), mesure entre 60° et 85°.

10. Dispositif de séparation selon la revendication 6 ou 7, **caractérisé en ce qu'**un angle (89), inclus entre une tangente (T), appliquée au sommet (S) de la partie d'entraînement (85) concave, et un fond (49) d'une goulotte d'admission (45) ou entre la partie d'entraînement (85) droite et un fond (49) d'une goulotte d'admission (45), est inférieur à 90°.

11. Dispositif de séparation selon la revendication 10, **caractérisé en ce que** l'angle (89) mesure entre 55° et 80°.

12. Dispositif de séparation selon la revendication 1, **caractérisé en ce que** la zone de collecte (41) est formée par une goulotte d'admission (45) d'un réservoir de stockage (44), montée sur un bâti (48) du dispositif de séparation (12), et est délimitée par des zones partielles de la goulotte d'admission (45) et le tronçon d'organe de transport (47), orienté vers celle-ci, en particulier la partie d'entraînement (85) dudit tronçon.

13. Dispositif de séparation selon la revendication 1, **caractérisé en ce que** la zone de collecte (39'; 41; 41') est formée par une zone partielle (161) concave, orientée vers celle-ci, d'un tronçon de l'organe de transport (47) et comporte une section en forme de cuvette.

14. Dispositif de séparation selon la revendication 13, **caractérisé en ce que** la zone de collecte (39'; 41; 41'), par référence au plan de coupe transversal, est délimitée sensiblement par une partie circulaire, dont la corde (162) coupe la partie d'entraînement (85), en particulier juste en amont, par référence à la direction de transport (9), de la partie d'entrée de la zone de séparation (86), ou coupe la partie d'entrée de la zone de séparation (86) et s'étend sensiblement parallèlement au plan horizontal (79)ou est inclinée en angle par rapport à ce dernier, et **en ce que** l'angle au centre (163) mesure entre 50° et 90°.

15. Dispositif de séparation selon l'une quelconque des revendications 1 à 14, **caractérisé en ce que,** sur un bâti (160) du dispositif de séparation (11'; 12'), à savoir sur deux parties latérales (159) verticales de celui-ci, disposées face à face à distance l'une de l'autre dans la direction de transport (9), sont montées rotatives respectivement au moins une roue d'entraînement (57) et plusieurs roues de renvoi (56), sachant que des droites de liaison (166), qui s'étendent entre les axes (165) parallèles, superposés verticalement et décalés horizontalement, des roues de renvoi et/ou des roues d'entraînement (56, 57), adjacentes à la zone de collecte (39'; 41'), et le plan horizontal (79) délimitent entre eux un angle (167) inférieur à 90°, en particulier entre 30° et 60°, par exemple 45°.

16. Dispositif de séparation selon l'une quelconque des revendications 1 à 14, **caractérisé en ce que,** sur un bâti (160) du dispositif de séparation (11'; 12'), à savoir sur deux parties latérales (159) verticales de celui-ci, disposées face à face à distance l'une de l'autre dans la direction de transport (9), sont montées rotatives respectivement au moins une roue d'entraînement (57) et plusieurs roues de renvoi (56), sachant que des droites de liaison (166), qui s'étendent entre les axes (165) parallèles, superposés verticalement et décalés horizontalement, des roues de renvoi et/ou des roues d'entraînement (56, 57), adjacentes à la zone de collecte (39'; 41'), et le plan horizontal (79) s'étendent parallèlement entre eux.

17. Dispositif de séparation selon l'une quelconque des revendications 1 à 16, **caractérisé en ce que** l'organe de transport (47) ou chaque organe d'entraînement (54) est guidé le long d'une glissière (65) qui est disposée sur chacune des parties latérales (52; 159) du bâti (48; 160) et s'étend au moins entre la zone de collecte (39'; 41; 41') et la zone d'évacuation (51) de l'organe de transport (47).

18. Dispositif de séparation selon l'une quelconque des revendications 1 à 5, **caractérisé en ce que** chaque entraîneur (46) a une section sensiblement en forme de C et comporte une base (107), opposée à la zone de collecte (39'; 41; 41') et deux branches (108) partant en porte-à-faux de la base (107).

19. Dispositif de séparation selon la revendication 18, **caractérisé en ce qu'**une extrémité libre de la première branche (108) avant, par référence à la direction de transport (9) des pièces allongées (2), s'avance en saille contre une extrémité libre de la deuxième branche (108) arrière, par référence à la direction de transport (9).

20. Dispositif de séparation selon la revendication 18 ou 19, **caractérisé en ce qu'**une extrémité libre de la première branche (108) avant, par référence à la direction de transport (9) des pièces allongées (2), est inclinée par rapport au fond (104) de la gorge et forme une surface de rejet (110) et le fond (104) de la gorge et la surface de rejet (110) délimitent un angle entre eux.

21. Dispositif de séparation selon l'une quelconque des revendications 18 à 20, **caractérisé en ce que** la base (107) du fond (104) de la gorge et la première et deuxième branche (108) forment les surfaces de guidage (105) orientées l'une vers l'autre.

22. Dispositif de séparation selon l'une quelconque des revendications 18 à 21, **caractérisé en ce qu'**une profondeur (111) minimale de la gorge (90) est au moins légèrement supérieure à une distance normale (112) mesurée entre un centre de gravité (113) de chaque pièce allongée (2), situé dans le plan de coupe transversal, et le fond (104) de la gorge.

23. Dispositif de séparation selon l'une quelconque des revendications 18 à 21, **caractérisé en ce qu'**une largeur (114) de la gorge (90) correspond à peu près à la dimension maximale (34) de la section de chaque pièce allongée (2).

24. Dispositif de séparation selon la revendication 1, **caractérisé en ce que** l'angle (106) mesure entre 20° et 30°.
